# EUROPEAN PATENT APPLICATION

(11) **EP 4 792 712 A1**
(43) Date of publication of application: **19.08.2026**
(21) Application number: 26158584.8
(22) Date of filing: 13.02.2026
(51) Int. Cl.: A47L 1/02

(54) **WINDOW CLEANING APPARATUS**

(30) Priority: 17.02.2025 KR 20250020220
(71) Applicant: LG Electronics Inc., Yeongdeungpo-gu Seoul 07336 (KR)
(72) Inventor: LEE, Jeongah, Seoul (KR); PARK, Janghee, Seoul (KR); YOON, Heesang, Seoul (KR); KEE, Hyunshin, Seoul (KR); KANG, Chanyoung, Seoul (KR)
(74) Representative: Schornack, Oliver

(57) **Abstract**

A window cleaning apparatus according to one embodiment of the present disclosure includes a frame (11) movably mounted on a window frame, a main body (100) movably mounted on the frame and configured to clean a window, a first moving device (1021) configured to move the main body in an up-down direction, and a second moving device (1022) configured to move the main body and the frame in a left-right direction, in which the second moving device includes a drive gear (116) and a drive motor (118) configured to rotate the drive gear, and the main body and the frame move left or right in accordance with rotation of the drive motor.

## Description

### BACKGROUND OF THE INVENTION

### 1. Field of the invention

The present disclosure relates to a window cleaning apparatus, and more specifically, to a window cleaning apparatus for cleaning an outer surface of a window.

### 2. Description of the Related Art

Generally, the outer surface of a window installed on an exterior wall surface of a building is difficult to clean. Therefore, when left unattended, the window may easily become contaminated by external dust, air pollution, and the like, which may reduce the light transmittance of the window.

To clean the outer surface of a window, the task may be entrusted to a specialized service provider; however, there is a problem in that costs are incurred on a periodic basis.

Conventional Korean Patent No. KR 10-1654876B1 discloses a device for cleaning a window. However, the device has an inconvenience in that a user should manually clean the window using the device from indoors. In addition, when the device is actually used indoors, there is a difficulty in cleaning the entire outer surface of the window.

Furthermore, conventional Korean Patent No. KR 10-2637716B1 discloses a rail-type window cleaner that cleans a window while moving up and down. However, the disclosed document only discloses a structure that is fixed to a specific window and moves up and down, and thus has a problem in that it may not be possible to properly clean a plurality of windows or windows of various shapes.

### SUMMARY OF THE INVENTION

An object of the present disclosure is to solve the above-described problems and other problems.

An object of the present disclosure is to provide a window cleaning apparatus for cleaning foreign substances attached to an outer surface of a window.

An object of the present disclosure is to provide a window cleaning apparatus capable of cleaning a window while moving in left-right and up-down directions.

An object of the present disclosure is to provide a window cleaning apparatus in which a frame and a main body, movably mounted on a window frame, can move to the left or right. That is, the present disclosure provides a window cleaning apparatus in which the entire frame is movable in a left-right direction, and the window cleaning apparatus is movable in an up and down direction relative to the frame.

An object of the present disclosure is to provide a window cleaning apparatus capable of cleaning a plurality of windows and windows of various sizes and shapes.

An object of the present disclosure is to provide a window cleaning apparatus that can be safely moved.

A window cleaning apparatus according to an embodiment of the present disclosure can move in an up-down direction and a left-right direction, and can clean windows of various sizes and shapes.

In the window cleaning apparatus according to an embodiment of the present disclosure, a frame and a main body movably mounted on a window frame can move left or right.

In the window cleaning apparatus according to an embodiment of the present disclosure, when the main body is in a preset home position, it is possible to prevent drive failure and accidents and improve reliability by moving the main body in the left-right direction.

The window cleaning apparatus according to one embodiment of the present disclosure includes a frame movably mounted on a window frame, a main body movably mounted on the frame and configured to clean a window, and a moving device configured to move the main body and the frame, in which the moving device includes a drive gear and a drive motor for rotating the drive gear, and the main body and the frame move to the left or right according to rotation of the drive motor.

A window cleaning apparatus according to one embodiment of the present disclosure includes a frame movably mounted on a window frame, a main body movably mounted on the frame and configured to clean a window, a first moving device configured to move the main body in an up-down direction, and a second moving device configured to move the main body and the frame in a left-right direction.

The second moving device includes a drive gear and a drive motor that rotates the drive gear.

The main body and the frame move left or right in accordance with rotation of the drive motor.

A gear module may be disposed in a lower frame of the frame.

The gear module may include a frame gear corresponding to the drive gear.

The drive gear and the frame gear may be engaged with each other, and when the drive motor rotates, the main body and the frame may move in accordance with a rotational direction of the drive motor.

The gear module may include a frame moving roller connected to the frame gear.

The frame moving roller may include a recessed portion into which the window frame of the window is inserted.

The gear module may include a frame guide roller positioned below the frame moving roller.

The frame guide roller may come into contact with a side surface of the window frame inserted into the recessed portion.

The frame gear may include two or more gears, and the two or more gears may be disposed symmetrically about the drive gear.

The second moving device may further include a reduction gear connected to the drive gear.

The second moving device may move the main body in the left-right direction when the main body is in a preset home position.

The home position may be a lowest position among positions in which the main body is movable in the up-down direction.

The second moving device may further include a microswitch configured to detect whether the main body is in the home position.

The window cleaning apparatus may further include an ultrasonic sensor configured to emit sound waves toward the window.

The window cleaning apparatus may further include a control unit configured to determine a distance to the window based on a measurement value of the ultrasonic sensor.

The control unit may determine positions of a central window, and left and right windows of the central window, based on the measurement value of the ultrasonic sensor.

The window cleaning apparatus may further include a current sensor configured to measure the current of the drive motor.

The control unit may determine whether the main body is positioned at left and right end points, based on a measurement value of the current sensor.

The window cleaning apparatus may further include a speed sensor configured to measure the rotation speed of the drive motor.

The control unit may determine whether the main body is movable based on a measurement value of the speed sensor.

A window cleaning apparatus according to one embodiment of the present disclosure includes a frame movably mounted on a window frame, a main body movably mounted on the frame and configured to clean a window, a first moving device configured to move the main body in an up-down direction, a second moving device configured to move the main body and the frame in a left-right direction, and a control unit, in which the second moving device includes a drive gear and a drive motor for rotating the drive gear, and the control unit controls the main body and the frame to move left or right by rotating the drive motor.

A window cleaning apparatus according to one embodiment of the present disclosure includes a frame movably mounted on a window frame, a main body movably mounted on the frame and configured to clean a window, a moving device configured to move the main body and the frame, and a control unit, in which the moving device includes a drive gear and a drive motor configured to rotate the drive gear, and the control unit controls the main body and the frame to move left or right by rotating the drive motor.

According to at least one of the embodiments of the present disclosure, the outer surface of a window can be automatically cleaned. This has the advantage of allowing the window to maintain a clean outer surface.

According to at least one of the embodiments of the present disclosure, the window cleaning apparatus can be moved in the up-down direction and the left-right direction, so that windows of various sizes and shapes can be cleaned with a single window cleaning apparatus.

According to at least one of the embodiments of the present disclosure, after a gear status is checked, the main body moves left and right, thereby preventing drive failure and accidents and improving reliability.

According to at least one of the embodiments of the present disclosure, when the main body is at the preset home position, the main body is moved left and right, thereby preventing drive failure and accidents and improving reliability.

Effects of the present disclosure are not limited to the effects mentioned above, and other effects not mentioned will be clearly understood by those skilled in the art from the description of the claims.

### BRIEF DESCRIPTION OF THE DRAWINGS

FIG. 1 is a view illustrating a state in which a window cleaning apparatus according to one embodiment of the present disclosure is disposed on a window frame.
FIG. 2 is a perspective view of the window cleaning apparatus according to one embodiment of the present disclosure.
FIG. 3 is a perspective view of a frame according to one embodiment of the present disclosure.
FIG. 4 is a perspective view of one side of a main body according to one embodiment of the present disclosure.
FIG. 5 is a perspective view of the other side of a main body according to one embodiment of the present disclosure.
FIG. 6 is a cross-sectional view taken along one side of FIG. 5.
FIG. 7 is a view illustrating a configuration disposed inside a housing according to one embodiment of the present disclosure.
FIG. 8 is a cross-sectional view taken along one side to illustrate an internal passage and a fan of a cleaning module according to one embodiment of the present disclosure.
FIG. 9 is a cross-sectional view of one side illustrating a front configuration of the cleaning module according to one embodiment of the present disclosure.
FIG. 10 is a diagram illustrating the structure of a main body to which rails are connected according to one embodiment of the present disclosure.
FIG. 11 is a diagram illustrating a gear module and a drive gear according to one embodiment of the present disclosure.
FIG. 12 is a view illustrating a state in which the main body moves upward according to one embodiment of the present disclosure.
FIG. 13 is a diagram illustrating a state in which the main body and the frame move left and right according to one embodiment of the present disclosure.
FIG. 14 is a perspective view of one side illustrating a cleaning module and a module moving device according to one embodiment of the present disclosure.
FIG. 15 is a cross-sectional view of one side illustrating a pressure sensor and related components disposed in the cleaning module according to one embodiment of the present disclosure.
FIGS. 16A and 16B are diagrams illustrating the disposition of the cleaning module according to the operation of a module device according to one embodiment of the present disclosure, FIG. 16A illustrates a state in which the cleaning module moves rearward, and FIG. 16B illustrates a state in which the cleaning module moves forward.
FIG. 17 is a block diagram of the window cleaning apparatus according to one embodiment of the present disclosure.
FIG. 18 is a schematic view of a gear module and a drive module for movement in the left-right direction according to one embodiment of the present disclosure.
FIG. 19 is a perspective view of the gear module according to one embodiment of the present disclosure.
FIG. 20 is an exploded perspective view of the gear module according to one embodiment of the present disclosure.
FIG. 21 is a perspective view of the drive module according to one embodiment of the present disclosure.
FIG. 22 and FIG. 23 are side views of a state in which the gear module and the drive module are connected according to one embodiment of the present disclosure.
FIG. 24 is a view for reference in the description of a state in which left-right movement is enabled according to one embodiment of the present disclosure.
FIG. 25 is a view for reference in the description of a state in which the left-right movement is disable according to one embodiment of the present disclosure.
FIG. 26 and FIG. 27 are diagrams for reference in the description of window position determination according to one embodiment of the present disclosure.
FIGS. 28 to 30 are diagrams for reference in the description of an operating state of a drive motor according to one embodiment of the present disclosure.
FIG. 31 is a flowchart illustrating an operation method of the window cleaning apparatus according to one embodiment of the present disclosure.
FIG. 32 is a flowchart illustrating the operation method of the window cleaning apparatus according to one embodiment of the present disclosure.
FIG. 33 is a flowchart illustrating the operation method of the window cleaning apparatus according to one embodiment of the present disclosure.
FIG. 34 is a diagram for reference in the description of window cleaning according to one embodiment of the present disclosure.
FIG. 35 is a flowchart illustrating the operation method of the window cleaning apparatus according to one embodiment of the present disclosure.

### DETAILED DESCRIPTION OF THE PREFERRED EMBODIMENTS

Hereinafter, embodiments disclosed in this specification will be described in detail with reference to the attached drawings. Regardless of the drawing numbers, identical or similar components are assigned the same reference numbers, and redundant descriptions thereof will be omitted.

The suffixes "module" and "unit" used for components in the following description are given or used interchangeably only for the convenience of writing specifications, and do not have distinct meanings or roles in themselves.

Terms that include ordinal numbers, such as first, second, or the like, may be used to describe various components, but the components are not limited by these terms. These terms are used solely to distinguish one component from another.

When a component is referred to as being "connected" or "coupled" to another component, it should be understood that it may be directly connected or coupled to that other component, but that there may be other components intervening. Conversely, when a component is referred to as being "directly connected" or "directly coupled" to another component, it should be understood that there are no other components intervening.

Singular expressions include plural expressions unless the context clearly dictates otherwise.

Hereinafter, window cleaning apparatuses according to embodiments of the present disclosure will be described with reference to the drawings.

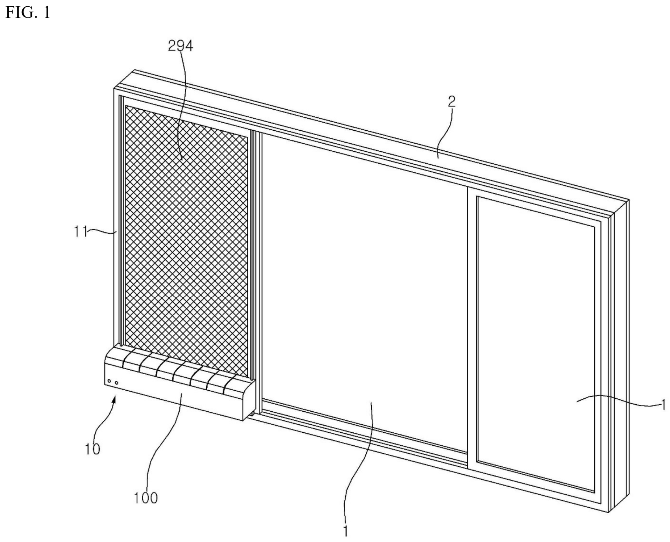

Referring to FIG. 1, a window cleaning apparatus disposed on a window frame will be described.

A plurality of windows 1 may be disposed in a window frame 2.

A window cleaning apparatus 10 is disposed on the window frame 2. The window cleaning apparatus 10 is disposed on one side of the window 1.

The window cleaning apparatus 10 is disposed so as to be able to move in a left-right direction on the window frame 2. The window cleaning apparatus 10 may clean the window 1 while moving an up-down direction on one side of the window 1.

The window cleaning apparatus 10 includes a frame 11 that is mounted on the window frame 2 and moves in the left-right direction of the window frame 2, and a main body 100 that is disposed to be able to move on the frame 11 in the up-down direction.

The frame 11 is disposed so as to be movable in the left-right direction on the window frame 2. The frame 11 may have a square frame shape and be mounted on the window frame 2. The frame 11 is disposed on one side of the window 1.

The main body 100 may move in the up-down direction along the frame 11 and clean the window 1. The main body 100 may remove or wipe off foreign substances from the window 1.

The window cleaning apparatus 10 includes a net 294 connected to each of the frame 11 and the main body 100. The length of the net 294 in the up-down direction may be changed depending on the disposition of the main body 100.

The net 294 may be a screen to prevent foreign substances or insects from entering the room.

One end of the net 294 is connected to the top of the frame 11. The other end of the net 294 is connected to the main body 100. The other end of the net connected to the main body 100 may be disposed in a rolling shape.

Accordingly, depending on the disposition of the main body 100, the rolling shape of the other end of the net 294 may move, and the length of the net 294 in the up-down direction may be changed.

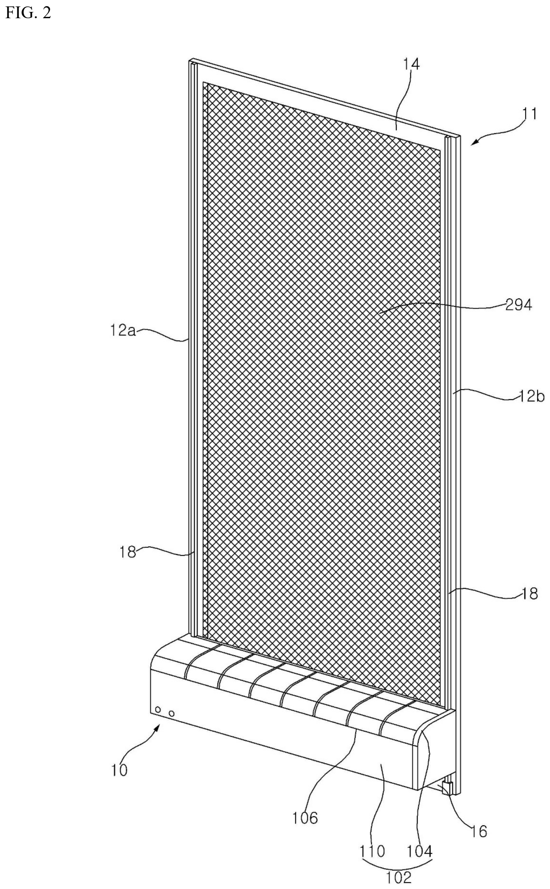

Referring to FIG. 2, the configuration of the frame and the main body is described.

The frame 11 may have a rectangular frame shape. The frame 11 may have the same shape as a net frame that is generally disposed on the outside of a window frame.

The frame 11 includes a pair of side frames 12a and 12b extending in the up-down direction and spaced apart in the left-right direction.

The frame 11 includes an upper frame 14 connecting the upper ends of the pair of side frames 12a and 12b and a lower frame 16 connecting the lower ends of a pair of side frames 12a and 12b.

A rail 18 that guides the movement of the main body 100 in the up-down direction is disposed on each of a pair of side frames 12a and 12b.

The rail 18 is disposed on the outer peripheral surface of each of the pair of side frames 12a and 12b. The rail 18 protrudes outward from the outer peripheral surface of each of the pair of side frames 12a and 12b.

The main body 100 may move in the up-down direction along the rail 18.

The main body 100 includes a housing 102 that forms the exterior. The housing 102 includes a lower case 110 that forms a space inside, and an upper case 104 that is disposed above the lower case 110.

A configuration for cleaning the window and a configuration for moving the main body 100 in the up-down direction may be disposed inside the lower case 110.

A solar panel 106 may be disposed in the upper case 104. The solar panel 106 disposed in the upper case 104 may serve as a power source for the operation of the main body 100.

The upper case 104 may be formed into a curved shape. The upper case 104 may form at least one inclined surface.

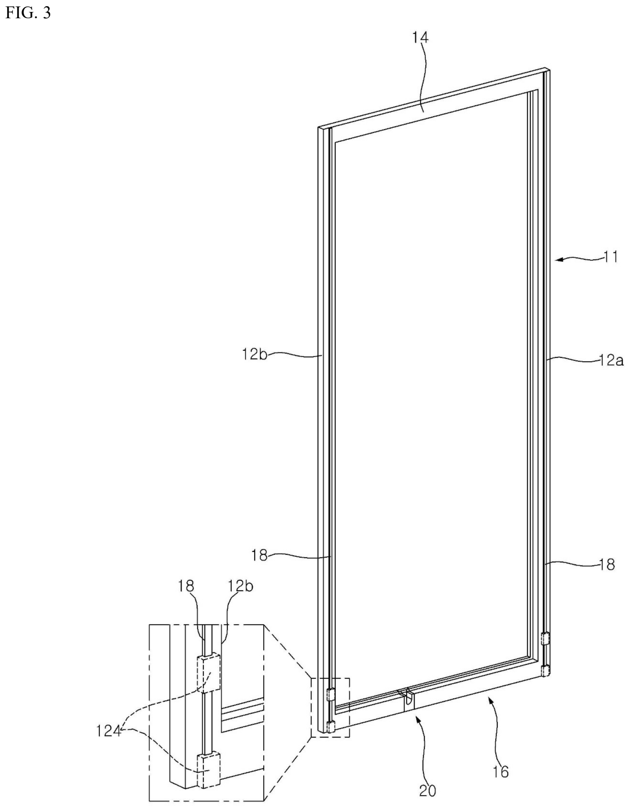

Referring to FIG. 3, the structure of the frame is further described.

The frame 11 includes the lower frame 16, the upper frame 14 disposed above and spaced apart from the lower frame 16, and the pair of side frames 12a and 12b extending in the up-down direction to connect both ends of the lower frame 16 and the upper frame 14, respectively.

The rail 18 is disposed on each of the pair of side frames 12a and 12b. A mover 124 mounted on the main body 100 may move along the rail 18. The mover 124 may move in the up-down direction along the rail 18 using a gear structure or a magnetic structure.

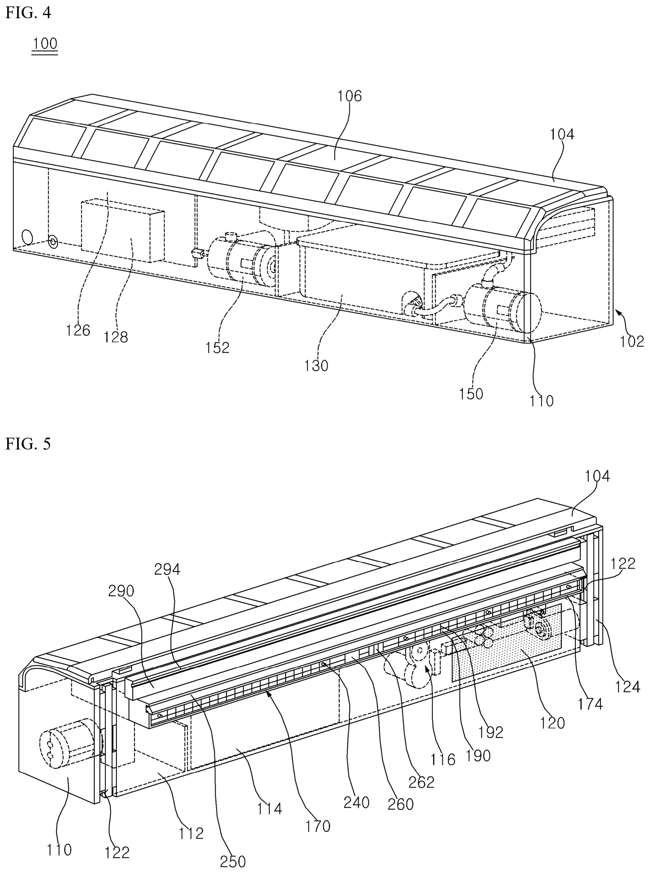

A gear module 20 that moves the frame 11 in the left-right direction is disposed on the lower frame 16. The gear module 20 may be connected to a drive gear 116 (refer to FIG. 5) disposed on the main body 100 described below.

A plurality of frame gears 22 that are rotatably disposed on the lower frame 16 and move along the window frame 2 may be disposed inside the gear module 20.

Referring to FIG. 4, the configuration of the main body is described.

The main body 100 includes the housing 102 that forms the exterior.

The housing 102 includes the lower case 110 and the upper case 104 disposed above the lower case 110.

A space is formed inside the lower case 110 and the upper case 104 in which a plurality of configurations are disposed.

The solar panel 106 is disposed in the upper case 104.

The main body 100 includes a cleaning liquid tank 130 that is disposed inside the housing 102 and stores the cleaning liquid. The main body 100 includes a first pump 150 that pumps the cleaning liquid stored in the cleaning liquid tank 130.

The first pump 150 may supply cleaning liquid to the spray nozzle 240 described below. The first pump 150 may supply the cleaning liquid stored in the cleaning liquid tank 130 to the spray nozzle 240 (refer to FIG. 5).

The main body 100 includes a second pump 152 that drains the cleaning liquid collected inside the housing 102. The second pump 152 may drain the cleaning liquid collected inside the cleaning module 170 described below to the outside of the main body 100.

The main body 100 includes a battery 128 that is disposed inside the housing 102 and stores power generated by the solar panel 106. The battery 128 may supply power to the configuration operated by the main body 100. Additionally, the battery 128 may be supplied with power through a separate external power source.

The main body 100 may include a main board 126 that is disposed inside the housing 102 and has a plurality of electronic components that control an electronically operating configuration.

Referring to FIG. 5, other configurations of the main body are described.

The main body 100 includes a first surface 112 facing the window. The housing 102 includes the first surface 112 facing the window. The lower case 110 includes the first surface 112 facing the window.

The first surface 112 is disposed to face the window when the main body 100 is mounted on the frame 11.

The main body 100 includes the cleaning module 170 that removes foreign substances present on the window. The cleaning module 170 is disposed so that a portion thereof protrudes from the first surface 112.

The cleaning module 170 may spray the cleaning liquid toward the window. The cleaning module 170 may be brought into close contact with the window and wipe off foreign substances attached to the window. The cleaning module 170 may spray air toward the window.

The cleaning module 170 includes a scraper 250 that is in close contact with the window on the front surface 174. The cleaning module 170 includes the spray nozzle 240 that sprays the cleaning liquid toward the window on the front surface 174.

A discharge port 192 through which air is discharged is formed on the front surface of the cleaning module 170. An intake port 190 through which air or cleaning liquid is suctioned is formed on the front surface 174 of the cleaning module 170.

Here, the front surface 174 of the cleaning module 170 may be a surface disposed to face the window.

An ultrasonic sensor 260 that detects the distance from the window is disposed on one side of the cleaning module 170. The distance from the window may be detected through the ultrasonic sensor 260, and the cleaning module 170 may be brought into close contact with the window.

A surface roughness sensor 262 that detects whether the window is contaminated is disposed on one side of the cleaning module 170. The surface roughness sensor 262 may detect whether the window is contaminated by detecting the glossiness of the window.

A net module 290 is disposed on the outside of the first surface 112 of the housing 102. The net module 290 is disposed above the cleaning module 170. The net 294 is exposed from the net module 290. The net module 290 forms a space within which the net 294 is disposed in a rolling state.

As the main body 100 moves in the up-down direction along the frame 11, the net rolled inside the net module 290 may be released or wound.

When the mover 124 moves the housing 102 in the up-down direction, the length of the net 294 extending downward from the upper end of the frame 11 changes.

A tank cover 114 for opening and closing an entrance through which the cleaning liquid tank 130 is inserted into and removed from the housing 102 is disposed on the first surface 112 of the housing 102. The first surface 112 of the housing 102 is disposed to face the indoor space. Accordingly, a user may withdraw or replace the cleaning liquid tank 130 from the housing 102 by disposing the tank cover 114 so that the entrance is open in the interior space.

A display 120 may be disposed on the first surface 112 of the housing 102. The display 120 may visualize and inform the user of information about the operation of the window cleaning apparatus 10 or the external environment.

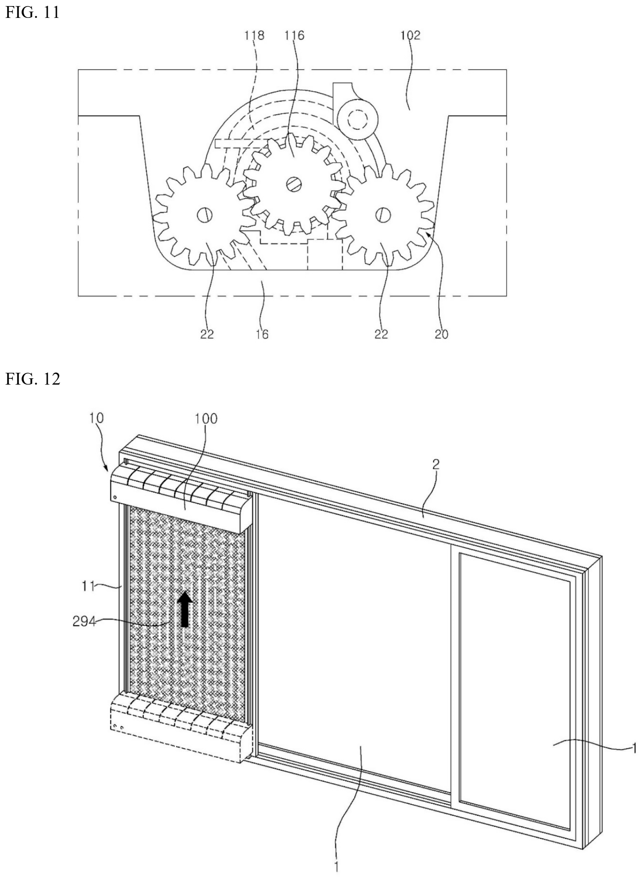

The drive gear 116 connected to the gear module 20 (refer to FIG. 11) disposed on a frame 11 is disposed on the first surface 112 of the housing 102. The main body 100 includes a drive motor 118 (refer to FIG. 11) that rotates the drive gear 116.

When the main body 100 is disposed in the lower end region of the frame 11, the drive gear 116 is engaged with the gear module 20. Therefore, as the drive gear 116 rotates, the frame 11 and the main body 100 may move in the left-right direction on the window frame 2.

A pair of case grooves 122 are formed at both ends of the first surface 112 of the housing 102. The mover 124 is disposed in each of the pair of case grooves 122. Each of the pair of case grooves 122 extends in the up-down direction.

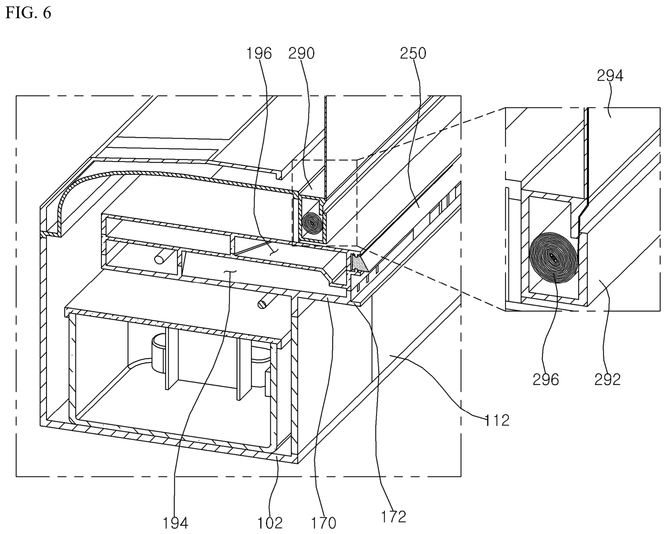

Referring to FIG. 6, the configuration and disposition of the cleaning module and the net module 290 are described.

The cleaning module 170 is disposed to protrude from the first surface 112 of the housing 102.

The cleaning module 170 is disposed below the net module 290. The cleaning module 170 protrudes further than the net module 290 in the direction in which the window is disposed.

The cleaning module 170 includes a cleaning body 172 that forms an air passage therein. Inside the cleaning body 172, an intake passage 194 through which air is suctioned in from an intake port 190 and a discharge passage 196 through which air is discharged to a discharge port 192 are formed.

The discharge passage 196 is disposed above the intake passage 194. The scraper 250 is disposed above the intake port 190 or the discharge port 192.

The net module 290 includes a net case 292, a net 294 having one end connected to the frame 11 and the other end disposed inside the net case 292, and a roller 296 for rolling the net 294 disposed inside the net case 292.

The net module 290 may be detachably disposed in the housing 102. Accordingly, the net module 290 may be fixedly mounted on the outside of the housing 102 or may be detachably disposed from the housing 102.

Depending on the disposition of the main body 100, the length of the net 294 in the up-down direction exposed to the outside varies.

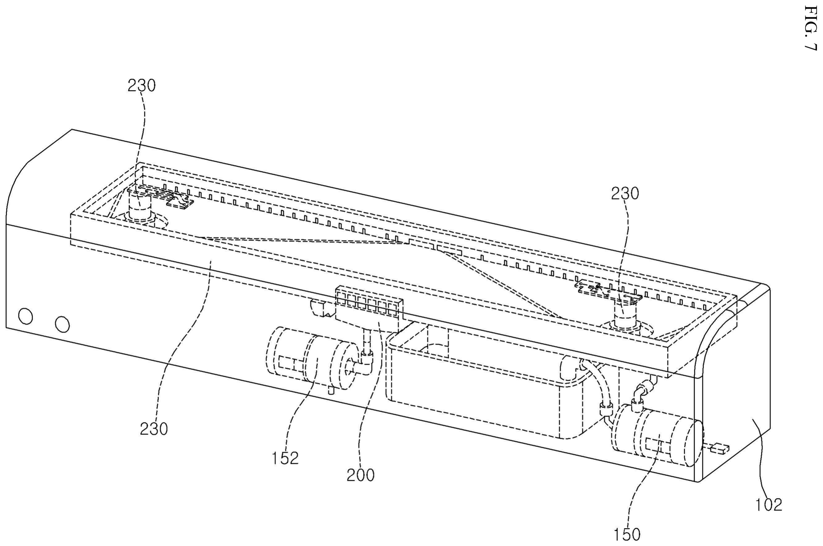

Referring to FIG. 7, the internal configuration of the main body is further described.

A portion of the cleaning module 170 may be disposed inside the housing 102. The cleaning module 170 includes a fan 230 that forms airflow in an air passage formed inside the cleaning body 172.

The fan 230 discharges air through the discharge port 192. The fan 230 suctions air through the intake port 190.

A water collecting unit 200 is disposed on the rear surface of the cleaning body 172. The water collecting unit 200 may form a space for collecting the cleaning liquid introduced together with air through the intake port 190.

The first pump 150 is disposed inside the housing 102 to supply the cleaning liquid stored in the cleaning liquid tank 130 to the spray nozzle 240. The first pump 150 is disposed on one side of the cleaning liquid tank 130.

The second pump 152 is disposed inside the housing 102 to discharge the cleaning liquid stored in the water collecting unit 200 to the outside. The second pump 152 is disposed on one side of the water collecting unit 200. The second pump 152 may discharge the cleaning liquid stored in the water collecting unit 200 to the outside of the main body 100.

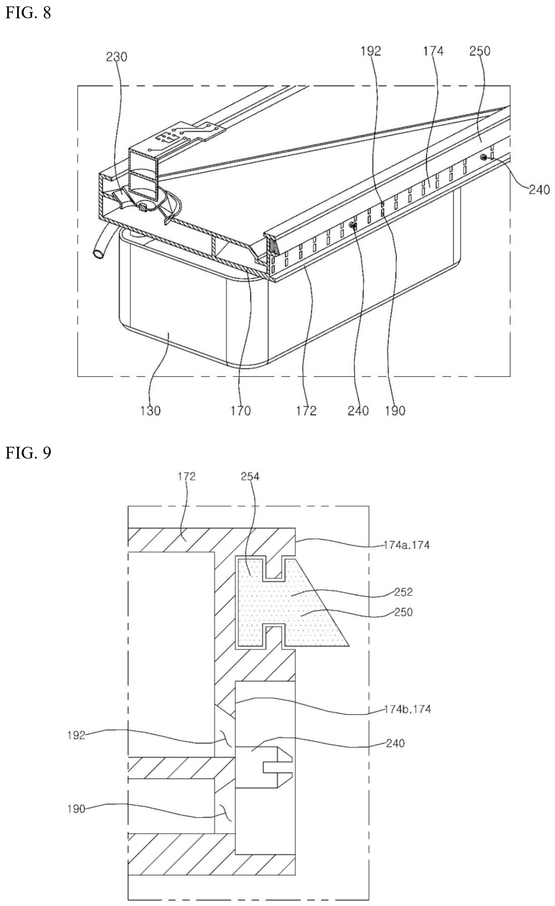

Referring to FIG. 8, the structure of the front surface of the cleaning module and the disposition of the passage and fan of the cleaning module are described.

The cleaning module 170 includes the cleaning body 172 that forms a passage through which air flows inside.

The intake port 190 and the discharge port 192 are formed on the front surface 174 of the cleaning body 172. The intake port 190 is disposed below the discharge port 192.

The scraper 250 is disposed on the front surface 174 of the cleaning body 172. The scraper 250 is disposed above the intake port 190 and the discharge port 192. The scraper 250 is disposed above the spray nozzle 240.

A plurality of intake ports 190 spaced apart in the left-right direction are formed on the front surface 174 of the cleaning body 172. The plurality of discharge ports 192 spaced apart in the left-right direction are formed on the front surface 174 of the cleaning body 172.

The cleaning module 170 includes the fan 230 that forms airflow through a passage formed inside the cleaning body 172. The fan 230 discharges air through a discharge port 192 formed on the front surface 174 of the cleaning body 172. The fan 230 introduces air into an intake port 190 formed on the front surface 174 of the cleaning body 172.

The spray nozzle 240 for spraying the cleaning liquid is disposed on the front surface 174 of the cleaning body 172. A plurality of the spray nozzles 240 are disposed spaced apart from each other in the left-right direction on the front surface of the cleaning body 172.

The spray nozzle 240 is disposed below the discharge port 192. The spray nozzle 240 is disposed above the intake port 190.

By the operation of the fan 230, air and cleaning liquid may be introduced into the cleaning body 172 through the intake port 190. By the operation of the fan 230, air may be discharged through the discharge port 192. By the operation of the first pump 150, the cleaning liquid stored in the cleaning liquid tank 130 may be sprayed through the spray nozzle 240.

Referring to FIG. 9, the front structure of the front of the cleaning module is described.

The cleaning body 172 includes a first front surface 174a on which the scraper 250 is disposed, and the front surface 174 on which the spray nozzle 240 is disposed. A second front surface 174b is disposed rearward of the first front surface 174a. The intake port 190 and the discharge port 192 are formed on the second front surface 174b.

The second front surface 174b is disposed below the first front surface 174a.

The scraper 250 is disposed on the first front surface 174a of the cleaning body 172. The scraper 250 is mounted on the cleaning body 172. The scraper 250 may be made of a rubber material. The scraper 250 may be formed of a different material from the cleaning body 172.

The scraper 250 may be brought into close contact with the window to wipe off foreign substances attached to the window. The scraper 250 includes a fixing portion 252 that is fixed to the cleaning body 172 and a protrusion 254 that protrudes toward the window from the front surface 174 of the cleaning body 172.

The fixing portion 252 has an "H" shape in cross section and is inserted into the inside of the cleaning body 172. The fixing portion 252 may fix the scraper 250 to the cleaning body 172.

The protrusion 254 protrudes forward from the front surface 174 of the cleaning body 172. The protrusion 254 may have a shape in which the width in the up-down direction becomes narrower toward the front. The protrusion 254 may have an inclined upper surface so that the width becomes narrower toward the front.

The discharge port 192 and the intake port 190 are disposed below the scraper 250. The intake port 190 is disposed below the discharge port 192.

The upper surface of the discharge port 192 forms a surface inclined downward toward the front. Therefore, the air discharged through the discharge port 192 may be discharged in a downwardly inclined direction.

The upper surface of the intake port 190 forms a surface inclined upward toward the front. Therefore, the cleaning liquid sprayed from above the intake port 190 may be introduced to the intake port 190. In addition, the foreign substances detached from the window by the air discharged from the discharge port 192 may be introduced into the intake port 190.

The spray nozzle 240 is disposed above the intake port 190. The spray nozzle 240 is disposed on the second front surface 174b. The front end of the spray nozzle 240 may be disposed behind the first front surface 174a.

That is, the spray nozzle 240 is disposed further away from the window than the first front surface 174a. The scraper 250 protrudes forward of the spray nozzle 240.

The intake port 190 and the discharge port 192 are disposed on the second front surface 174b.

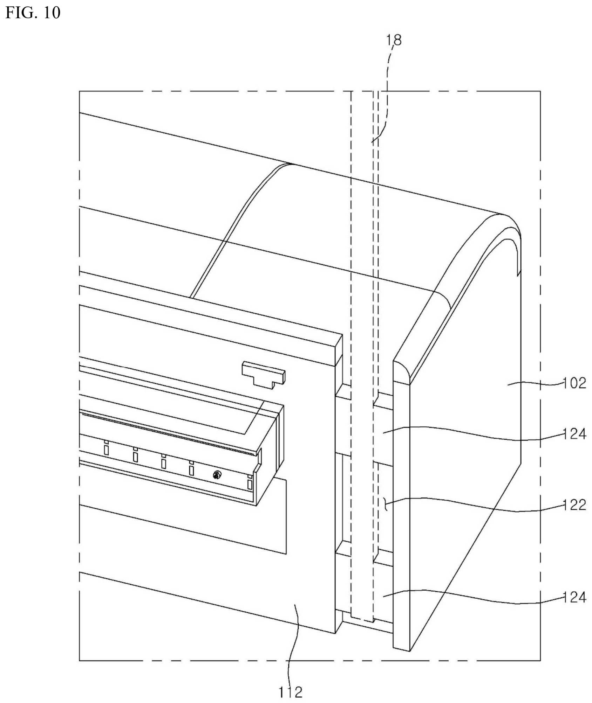

Referring to FIG. 10, the case groove and mover of the main body are described.

The case grooves 122 are formed at both ends of the first surface 112 of the housing 102. The case groove 122 extends in the up-down direction. The case groove 122 forms a concave groove inward on the first surface 112 of the housing 102.

A rail 18 disposed on the frame 11 may be disposed in the case groove 122. The state in which the main body 100 is mounted on the frame 11 may be a state in which a part of the rail 18 is inserted into the case groove 122.

The mover 124 is disposed in the case groove 122. The mover 124 may move the main body 100 the up-down direction.

After the scraper 250 is brought into close contact with the window 1, the mover 124 moves the housing 102 downward.

The mover 124 may have a structure that moves in a magnetic levitation manner. Accordingly, an electromagnet may be disposed on the rail 18. The electromagnet disposed on the rail 18 may move the mover 124 by changing the polarity of the electromagnet.

In addition, the mover 124 includes a gear structure inside and may move the main body 100 by rotating the gear structure. In this case, a rail gear (not illustrated) with which gears engage may be disposed on the rail 18.

FIG. 11 illustrates the gear module and the drive gear disposed on the frame.

The gear module 20 is disposed on the lower frame 16. The gear module 20 includes at least one frame gear 22. The frame gear 22 is disposed rotatably inside the lower frame 16. The frame gear 22 may rotate at a fixed position.

The frame gear 22 may include a cover made of rubber. In addition, a separate cover made of rubber may be disposed on the outer periphery of the frame gear 22.

The frame gear 22 may rub against the bottom surface of the window frame 2 when rotating. Therefore, when the frame gear 22 rotates, the frame gear 22 may move the frame 11 in the left-right direction while rubbing against the window frame 2.

The frame gear 22 may include a pair of frame gears 22 spaced apart in the left-right direction. A drive gear 116 is disposed between the pair of frame gears 22. The drive gear 116 meshes with each of the pair of frame gears 22.

Accordingly, the pair of frame gears 22 disposed on both sides may rotate in the same direction according to the rotation of the drive gear 116. The drive motor 118 that rotates the drive gear 116 may be disposed on one side of the drive gear 116.

Referring to FIG. 12, the movement of the window cleaning apparatus in the up-down direction is described.

By the operation of the mover 124, the main body 100 moves in the up-down direction along the frame 11. As the main body 100 moves, the length of the net 294 changes. The upper end of the net 294 is fixed to the upper frame 14. Therefore, the net 294 may be disposed from the upper frame 14 to the position where the main body 100 is disposed.

The main body 100 may remove foreign substances attached to the window 1 while moving along the frame 11. The cleaning module 170 of the main body 100 may spray air onto the window to remove the foreign substances attached to the window 1. The cleaning module 170 may spray the cleaning liquid onto the window.

The cleaning module 170 may wipe off the foreign substances attached to the window 1 while moving downward along the window 1.

The cleaning module 170 may clean the window 1 while moving downward along the frame 11. When the main body 100 moves to the lower end of the frame 11, the net 294 may be disposed to cover the window.

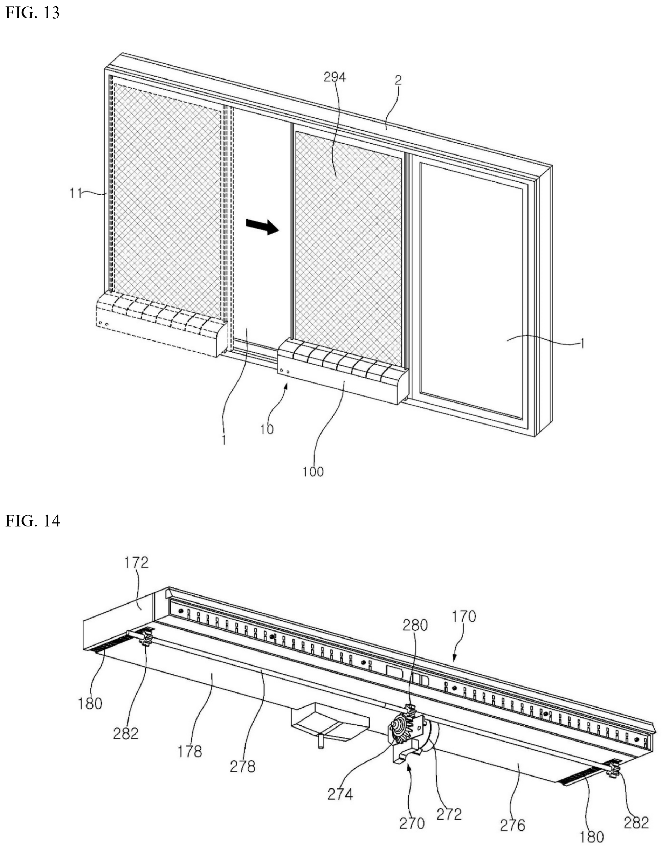

Referring to FIG. 13, the movement of the window cleaning apparatus in the left-right direction is described.

The window cleaning apparatus 10 moves in the left-right direction through the frame 11. The frame 11 may move in the left-right direction on the window frame 2.

As the frame 11 moves, the main body 100 disposed on the frame 11 also moves.

When the main body 100 is disposed at the lower end of the frame 11, the drive gear 116 of the main body 100 and the gear module 20 of the frame 11 are connected. Specifically, the drive gear 116 is engaged with the frame gear 22.

When the drive motor 118 of the main body 100 operates, the drive gear 116 rotates the frame gear 22. When the frame gear 22 rotates, the frame 11 may move in the left-right direction in a state of being disposed on the window frame 2.

The frame gear 22 may be brought into close contact with the window frame 2 to move the frame 11 through friction.

The frame 11 may move in the left-right direction in a state where the main body 100 is moved to the lower end of the frame 11. In a state where the frame 11 is moved, one side of the window may be cleaned while the main body 100 moves in the up-down direction.

Referring to FIG. 14, a module moving device for changing the disposition of the cleaning module is described.

The main body 100 includes a module moving device 270 that changes the disposition of the cleaning module 170. The module moving device 270 may move the cleaning module 170 in a front-rear direction.

The module moving device 270 brings the scraper 250 into contact with from the window 1 or separates the scraper 250 from the window 1. The module moving device 270 brings the scraper 250 into close contact with the window 1.

The module moving device 270 includes a module motor 272 and a transmission member 276 that rotates by the operation of the module motor 272 to move the cleaning module 170.

The transmission member 276 is rotatably disposed below the cleaning body 172. The transmission member 276 may have a long bar shape in the left-right direction. The transmission member 276 may have a long rod shape in the left-right direction.

The transmission member 276 rotates with the rotational force of the module motor 272 to move the cleaning body 172.

The module moving device 270 includes a module motor gear 274 that rotates by the operation of the module motor 272.

The transmission member 276 includes a first transmission gear 280 that engages with the module motor gear 274, a pair of second transmission gears 282 that is connected to a lower surface 178 of the cleaning body 172, and a rotation bar 278 that transmits the rotational force of the first transmission gear 280 to each of the pair of second transmission gears 282.

The pair of second transmission gears 282 may be disposed at both ends of the rotation bar 278. The first transmission gear 280 is disposed between the pair of second transmission gears 282.

The first transmission gear 280 and the pair of second transmission gears 282 are connected to a rotation bar 278 and rotate together.

A rack gear 180 that engages with a transmission member 276 may be disposed on the lower surface 178 of the cleaning body 172. A pair of rack gears 180 that are spaced apart on both sides and extend in the front-rear direction may be disposed on the lower surface 178 of the cleaning body 172.

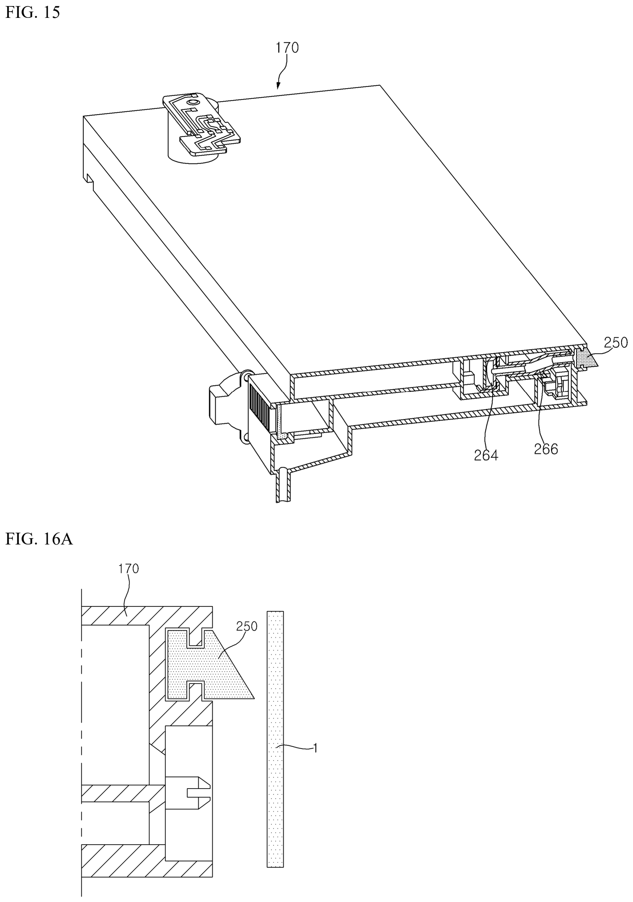

Referring to FIG. 15, a pressure sensor that detects contact with the scraper is described.

The cleaning module 170 includes a pressure sensor 264 that detects whether the scraper 250 is in contact with the window. When the scraper 250 comes into contact with the window, a force pushing the scraper 250 backward may be transmitted to the pressure sensor 264.

The pressure sensor 264 may precisely detect whether the scraper 250 is in contact with the window.

The cleaning module 170 includes a pressure transmission unit 266. The pressure transmission unit 266 may transmit the force generated by the scraper 250 to the pressure sensor 264. The pressure transmitting unit 266 may be formed in the form of an air tube. Accordingly, when the scraper 250 is brought into contact with the window 1, the air inside the pressure transmitting unit 266 is compressed and the force may be transmitted to the pressure sensor 264.

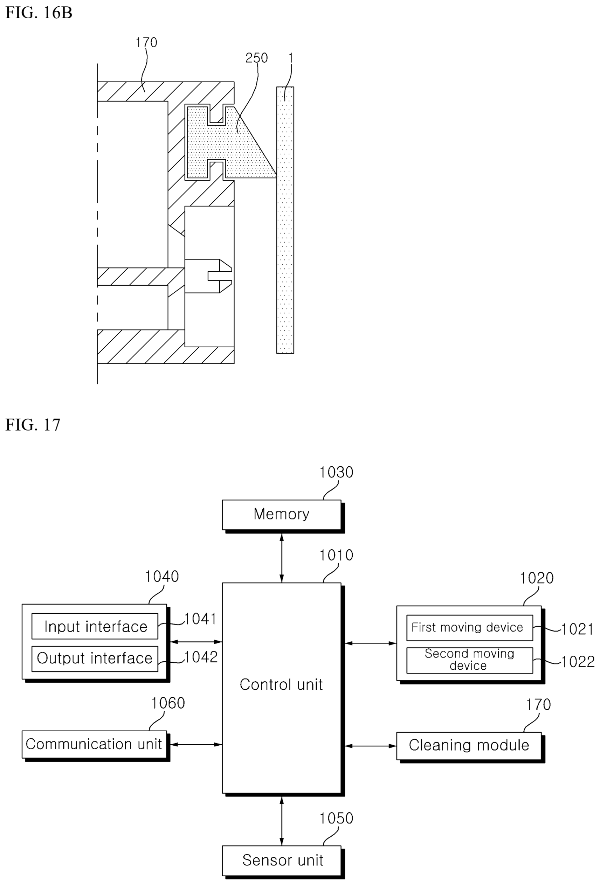

Referring to FIGS. 16A and 16B, the movement of the cleaning module is described.

As illustrated in FIG. 16A, the cleaning module 170 may be disposed at a first position P1 spaced apart from the window 1 by a predetermined distance. As illustrated in FIG. 16B, the cleaning module 170 may be disposed at a second position P2 in contact with the window 1.

The first position P1 may be a state in which the scraper 250 of the cleaning module 170 is not in contact with the window 1. The first position P1 may be a state in which pressure through the scraper 250 is not detected by the pressure sensor 264 of the cleaning module 170.

When the main body 100 moves upward, the cleaning module 170 may be disposed at the first position P1.

The first position P1 may be a state in which the module moving device 270 moves the cleaning module 170 to the rear.

The second position P2 may be a state in which the scraper 250 of the cleaning module 170 is in contact with the window 1. The second position P2 may be a state in which pressure through the scraper 250 is detected by the pressure sensor 264 of the cleaning module 170.

When the main body 100 moves downward, the cleaning module 170 may be disposed at the second position P2.

The second position P2 may be a state in which the module moving device 270 moves the cleaning module 170 forward.

The module moving device 270 primarily moves the cleaning module 170 based on the distance from the window 1 detected by the ultrasonic sensor 260. Thereafter, the module moving device 270 secondarily moves the cleaning module 170 based on pressure information detected by the pressure sensor 264.

That is, the module moving device 270 primarily moves the cleaning module 170 based on the distance detected by the ultrasonic sensor 260 at the first position P1. The position to which the cleaning module 170 primarily moves may be the second position P2 or a position between the first position P1 and the second position P2.

The distance between the window 1 and the cleaning module 170, as detected by the ultrasonic sensor 260, may have low accuracy.

In addition, even when the module moving device 270 is operated to move the cleaning module 170 based on information detected by the ultrasonic sensor 260, the scraper 250 may not be in close contact with the window 1 at a desired pressure.

Accordingly, the cleaning module 170 is moved secondarily based on the pressure information detected by the pressure sensor 264. At this time, the scraper 250 may be brought into close contact with the window 1 to an extent sufficient to remove foreign substances attached to the window 1 while moving downward.

That is, the module moving device 270 may move the cleaning module 170 so that the pressure detected by the pressure sensor 264 is formed between a first set pressure and a second set pressure.

The first set pressure may be a pressure generated at a point in time when the scraper 250 starts to come into contact with the window 1. The second set pressure may be a pressure at a point in time when the force due to friction between the scraper 250 and the window 1 becomes greater than the force of the mover 124 moving the main body 100 in the up-down direction.

Therefore, when the second set pressure is exceeded, the main body 100 may not move in the up-down direction even when the mover 124 operates.

After the scraper 250 is brought into close contact with the window 1, the mover 124 moves the housing 102 downward.

After the module moving device 270 brings the cleaning module 170 into close contact with the window 1, the mover 124 and the first pump 150 operate. However, before the module moving device 270 moves the cleaning module 170 to the window 1, the first pump 150 temporarily operates so that the cleaning liquid is sprayed through the spray nozzle 240.

By spraying the cleaning liquid onto the window 1 by the first pump 150, the frictional force generated between the window 1 and the scraper 250 may be alleviated. Accordingly, the force required for the mover 124 to move the main body 100 downward may be reduced.

FIG. 17 is a block diagram of the window cleaning apparatus according to one embodiment of the present disclosure.

Referring to FIG. 17, the window cleaning apparatus 10 may include a control unit 1010 that controls the overall operation of the window cleaning apparatus 10.

At least some of internal blocks of the window cleaning apparatus 10 illustrated in FIG. 17, such as the control unit 1010, may be disposed inside the main body 100. For example, the control unit 1010 may be mounted on the main board 126.

The window cleaning apparatus 10 may include a memory 1030, a sensor unit 1050, a communication unit 1060, an interface 1040, or the like.

The memory 1030 may store data for controlling the operation of the window cleaning apparatus 10, data detected or measured through the sensor unit 1050 during operation, and data received through the communication unit 1060. Meanwhile, the window cleaning apparatus 10 may include a buffer for temporarily storing data, and the buffer may be included in the control unit 1010 or the memory 1030.

The control unit 1010 may process various data received through the communication unit 1060 to update the memory 1530. For example, when the data input through the communication unit 1060 is data updated for an operation program prestored in the memory 1030, the memory 1030 may be updated using the data, and when the input data is a new operation program, the data may be additionally stored in the memory 1030.

The sensor unit 1050 may include a plurality of sensors to measure illuminance, humidity, or the like, or sense the operating state of the window cleaning apparatus 10. For example, the sensor unit 1050 may include the above-described ultrasonic sensor 260, surface illuminance sensor 262, and pressure sensor 264. In addition, the sensor unit 1050 may include an illuminance sensor (not illustrated), a temperature sensor (not illustrated), a humidity sensor (not illustrated), an air quality sensor (not illustrated), or the like.

The ultrasonic sensor 260 may measure the distance to the window 1. The ultrasonic sensor 260 may also measure transparent glass, so it is suitable for measuring the distance to the window 1 and/or window frame 2.

The ultrasonic sensor 260 emits sound waves in the direction of the window. The ultrasonic sensor 260 transmits an ultrasonic signal, which is a distance measurement signal, in the direction of the window. The ultrasonic sensor 260 receives the reflected signal. The closer the distance between the ultrasonic sensor 260 and the object, the faster the reflected ultrasonic signal is received. The farther the distance between the ultrasonic sensor 260 and the object, the slower the reflected ultrasonic signal is received. The distance may be measured based on the time it takes for the ultrasonic signal of the ultrasonic sensor 260 to be reflected from the window 1 and/or the window frame 2 and return.

The control unit 1010 may control the sensing operation of the ultrasonic sensor 260. The control unit 1010 may determine the distance to the window 1 and/or the window frame 2 based on the measurement value of the ultrasonic sensor 260. Here, the measurement value of the ultrasonic sensor 260 may be the data itself measured by the ultrasonic sensor 260, or may be secondary data (amplification, calculation, or the like) obtained by processing the data measured by the ultrasonic sensor 260 by the ultrasonic sensor 260 or the control unit 1010.

For example, the measurement value may be time difference data of the transmission/reception signal of the ultrasonic sensor 260 or distance data based on the time difference data.

Alternatively, the measurement value may be intensity data of the signal received from the ultrasonic sensor 260 or distance data based on the signal intensity data.

The ultrasonic sensor 260 transmits and receives ultrasonic signals at a specific point. The control unit 1010 may control the cleaning operation of the cleaning module 170 and the movement operation of a movement device 1020 based on the data sensed by the ultrasonic sensor 260.

The surface illuminance sensor 262 measures the roughness on the window 1 side in front of the window cleaning apparatus 10, and an illuminance sensor may measure the illuminance on the outside at the rear of the window cleaning apparatus 10.

Additionally, the temperature sensor may measure temperature, the humidity sensor may measure humidity, and the air quality sensor may measure air quality.

Additionally, the sensor unit 1050 may include a motor sensor that senses the operating state of the drive motor 118. For example, the sensor unit 1050 may include a current sensor that measures the current of the drive motor 118. The sensor unit 1050 may include a speed sensor that measures the rotation speed of the drive motor 118.

The control unit 1010 may control the flow of data input or output to the window cleaning apparatus 10 and generate and apply a control command based on data input from the sensor unit 1050.

Meanwhile, the window cleaning apparatus 10 may communicate with other devices such as a server, home appliance, or terminal through a communication unit 1060 to transmit and receive data.

The communication unit 1060 may include one or more communication modules. The communication unit 1060 may include a transmitter (not illustrated) capable of transmitting predetermined data to another device. In addition, the communication unit 1060 may include a receiver (not illustrated) capable of receiving predetermined data from another device. The transmitter and receiver may be integrated to form a transceiver.

The user may control the window cleaning apparatus 10 from indoors using a user terminal such as a smartphone.

The input interface 1041 may receive various user commands related to the operation of the window cleaning apparatus 10 and transmit a control signal corresponding to the input commands to the control unit 1010. The input interface 1041 may include a touch pad, physical buttons, or the like.

According to an embodiment, the input interface 1041 may include a receiver for receiving a control command transmitted by a remote control device (not illustrated).

The user may control the window cleaning apparatus 10 from indoors using a remote control device.

The output interface 1041 may be equipped with the display 120 described above. For example, the display 120 may display an operating status of the window cleaning apparatus 10, an operating state related to occurrence of an error or the like, and information such as weather.

The output interface 1041 may be equipped with an audio device such as a speaker (not illustrated) or a buzzer (not illustrated). For example, the output interface 1041 may output a sound effect regarding the operating status of the window cleaning apparatus 10 and may output a predetermined warning sound when an error occurs.

Depending on the embodiment, the display 120 may be implemented as a touchscreen and may also be used as an input means. In addition, when the display 120 is a touchscreen, at least some of the hard buttons included in the input interface 1041 may be removed.

The control unit 1010 may be connected to each component provided in the window cleaning apparatus 10. For example, the control unit 1010 may transmit and/or receive signals to and/or from respective components provided in the window cleaning apparatus 10 and control the overall operation of the respective components.

The control unit 1010 may include at least one processor, and may control the overall operation of the window cleaning apparatus 10 using the processor included therein. Here, the processor may be a general processor such as a central processing unit (CPU). Of course, the processor may be a dedicated device such as an ASIC or another hardware-based processor.

The window cleaning apparatus 10 may include the cleaning module 170 that cleans the window 1. The control unit 1010 may control the cleaning module 170 to clean the window 1.

The window cleaning apparatus 10 may provide the plurality of cleaning modes. The user may select any one of the plurality of cleaning modes. The control unit 1010 may control the window cleaning apparatus 10 according to the selected cleaning mode.

Additionally, when the user selects an automatic mode, the control unit 1010 may automatically select the cleaning mode based on information obtained through the sensor unit 1050 and/or the communication unit 1060. Accordingly, automatic cleaning according to a set schedule and external environment is possible, and windows may be kept clean.

The window cleaning apparatus 10 may include the moving device 1020 that moves the window cleaning apparatus 10. The moving device 1020 may move at least the main body 100 in a predetermined direction.

The control unit 1010 may control the moving device 1020 to move the main body 100. In addition, the control unit 1010 may control the moving device 1020 to move the frame 11.

The frame 11 is movably mounted on the window frame 2, and the main body 100 is movably mounted on the frame 11.

The moving device 1020 includes a first moving device 1021 for the movement in the up-down direction and a second moving device 1022 for the movement in the left-right direction.

The first moving device 1021 may move the main body 100 in the up-down direction. The main body 100 may move in the up-down direction along the frame 11 to clean the window 1. For example, the first moving device 1021 may include the mover 124.

The second moving device 1022 may move the frame 11 in the left-right direction. For example, the second moving device 1022 may include the gear module 20, the drive gear 116, and the drive motor 118.

The main body 100 may be mounted on the frame 11 to move along with the movement direction of the frame 11. Accordingly, the second moving device 1022 may move the frame 11 and the main body 100 in the left-right direction with respect to the window 1.

The window cleaning apparatus 10 may be mounted on a conventional window and screen frame, and may clean the window by moving in the up-down direction and the left-right direction, regardless of the shape or number of windows.

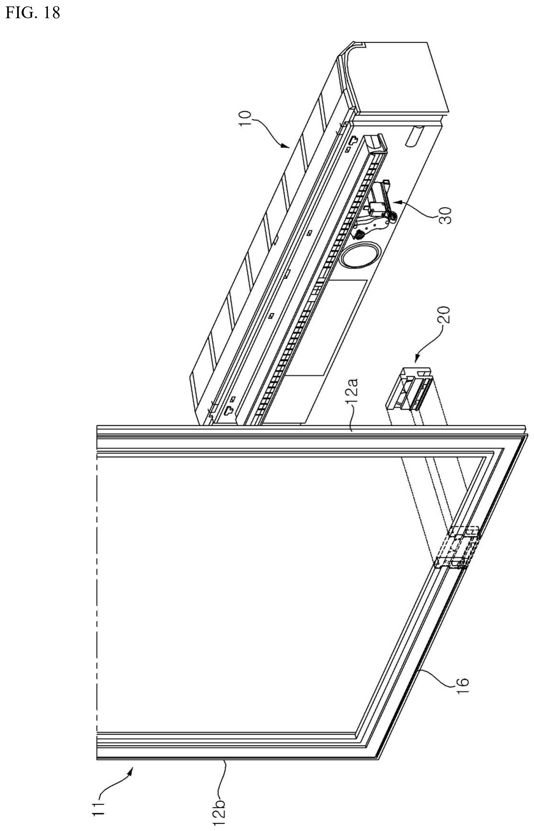

FIG. 18 is a schematic view of a gear module and a drive module for movement in the left-right direction according to one embodiment of the present disclosure.

Referring to FIG. 18, a drive module 30 is disposed in the main body 100. The drive module 30 may include the drive gear 116 and the drive motor 118.

The gear module 20 is disposed on the lower frame 16 of the frame 11. The frame gear 22 of the gear module 20 corresponds to the drive gear 116 of the drive module 30.

When the gear module 20 and the drive module 30 are connected, the frame 11 may move in the left-right direction. The drive gear 116 is connected to the drive motor 118, and may be rotated according to the rotation of the drive motor 118.

In a state where the frame gear 22 and the drive gear 116 are engaged with each other, when the drive motor 118 rotates, the frame 11 and the main body 100 move in the left-right direction while the drive gear 116 and the frame gear 22 rotate.

The control unit 1010 may control the rotational direction of the drive motor 118 to determine the movement direction of the frame 11 and the main body 100. The frame 11 and the main body 100 may move to the left or right depending on the rotational direction of the drive motor 118.

In addition, the control unit 1010 may control the rotation speed and operating time of the drive motor 118 to move the frame 11 and the main body 100 to a required position.

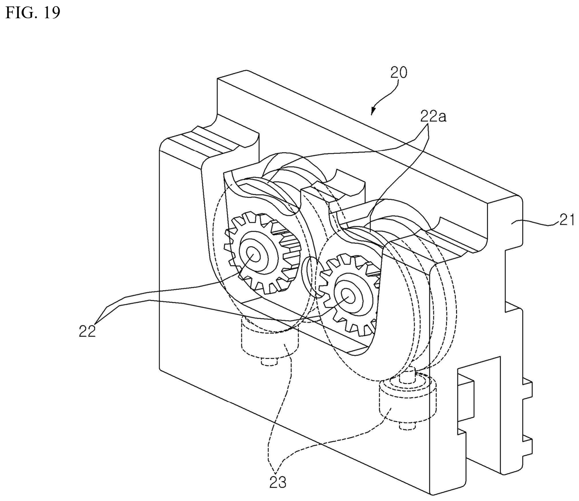

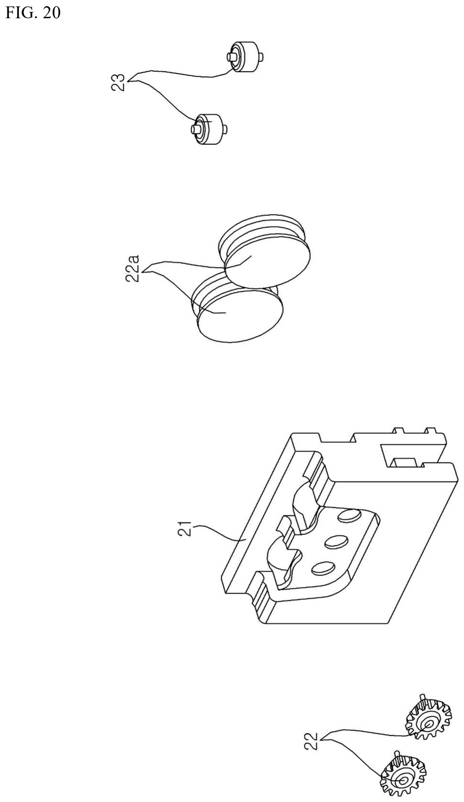

FIG. 19 is a perspective view of the gear module according to one embodiment of the present disclosure, and FIG. 20 is an exploded perspective view of the gear module according to one embodiment of the present disclosure.

Referring to FIGS. 19 and 20, the gear module 20 includes a frame gear case 21 that forms the exterior. A space in which a plurality of components are disposed is formed inside the frame gear case 21.

The gear module 20 may further include a frame moving roller 22a connected to the frame gear 22. The frame gear 22 and the frame moving roller 22a may be disposed inside the frame gear case 21.

The frame moving roller 22a may be formed of a rubber material. One side of the frame moving roller 22a is connected to the frame gear 22, and thus, the frame moving roller 22 may rotate according to the rotation of the frame gear 22. The center of the frame gear 22 and the center of the frame moving roller 22a may be positioned on the same line. A portion of the frame gear 22 may be inserted into the frame moving roller 22a. Alternatively, the frame moving roller 22a may be disposed to surround the frame gear 22.

The frame gear 22 may include two or more gears 22. For example, the frame gear 22 may include a pair of frame gears 22 spaced apart in the left-right direction. The frame gears 22 may be disposed symmetrically about the drive gear 116. The frame gear 22 may contact the drive gear 116 on the left and right sides.

The gear module 20 may further include a frame guide roller 23 that is positioned below the frame moving roller 22a to improve contact with the window frame 2.

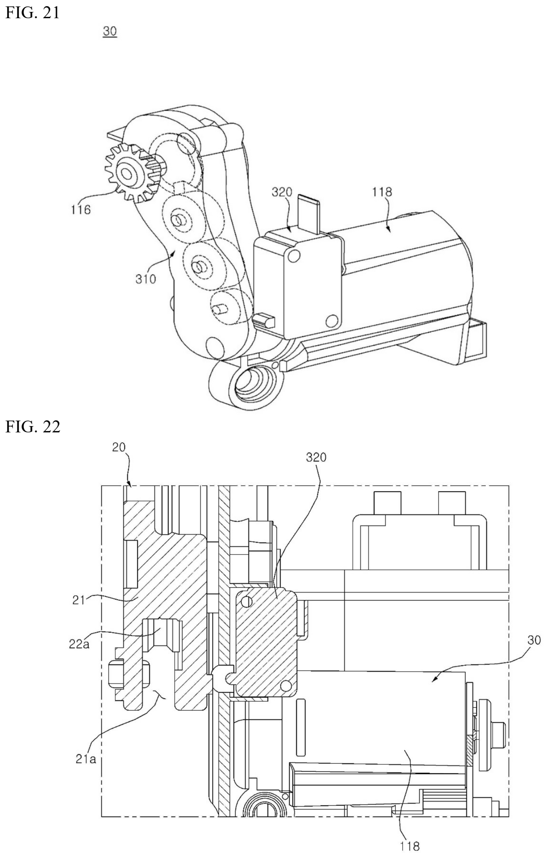

FIG. 21 is a perspective view of a drive module according to one embodiment of the present disclosure.

Referring to FIG. 21, the drive module 30 may include the drive motor 118 and multi-stage gears 116 and 310 connected to the drive motor 118.

The gears 116 and 310 may include a drive gear 116 and a reduction gear 310 for speed reduction. The reduction gear 310 may also be composed of multiple gears.

The drive module 30 may further include a sensor 320 for checking a home position. The sensor 320 for checking the home position may be a microswitch 320. The microswitch 320 may detect whether the main body 100 is in the home position. When the home position is detected by the microswitch 320, the control unit 1010 may rotate the drive motor 118.

The home position may be the lowest position among positions in which the main body is movable in the up-down direction.

The home position may be a position where the frame gear 22 and the drive gear 116 can be engaged with each other.

When the main body 100 is in the home position, the control unit 1010 may determine that the frame gear 22 and the drive gear 116 are engaged with each other and the main body 100 can move left and right.

The second moving device 1022 may move the frame 11 and the main body 100 in the left-right direction when the main body 100 is in the preset home position under the control of the control unit 1010.

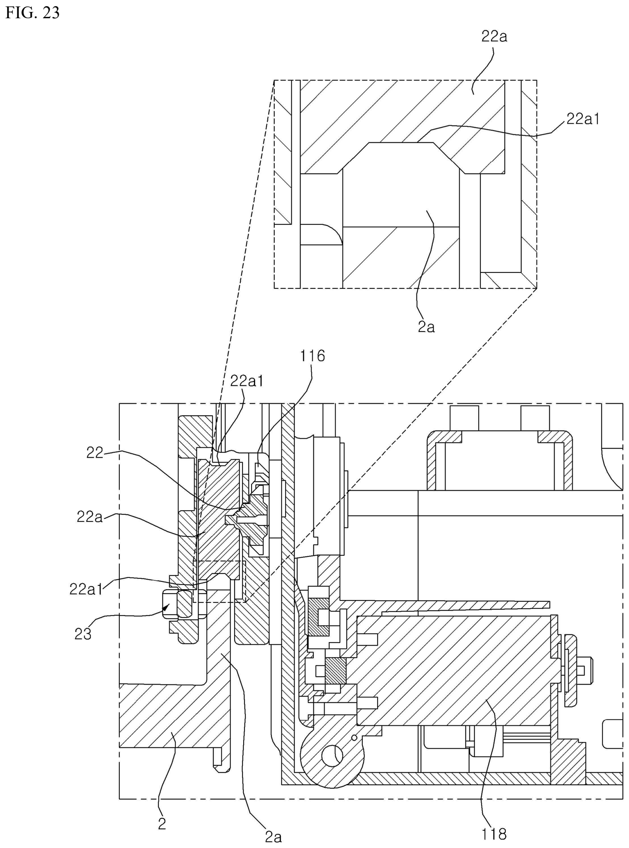

FIG. 22 and FIG. 23 are side views of a state in which the gear module and the drive module are connected according to one embodiment of the present disclosure.

Referring to FIGS. 22 and 23, when the main body 100 is in the home position, the frame gear 22 and the drive gear 116 may be engaged with each other.

The pair of frame gears 22 is disposed on the left and right with the drive gear 116 as the center, so that a higher frictional force can be transmitted than when there is only one gear.

An opening 21a may be formed at the lower portion of the frame gear case 21 so that the frame moving roller 22a can come into contact with the window frame 2.

The frame moving roller 22a may be formed in an uneven shape. The frame moving roller 22a may include a recessed portion 22a1 into which the window frame 2 is inserted. Accordingly, the adhesion force may be increased.

The frame guide roller 23 may contact the side surface of the window frame 2 inserted into the recessed portion 22a1 to bring the window frame 2 and the gear module 20 into closer contact with each other in the front-rear direction.

The microswitch 320 may detect the main body 100 in the home position.

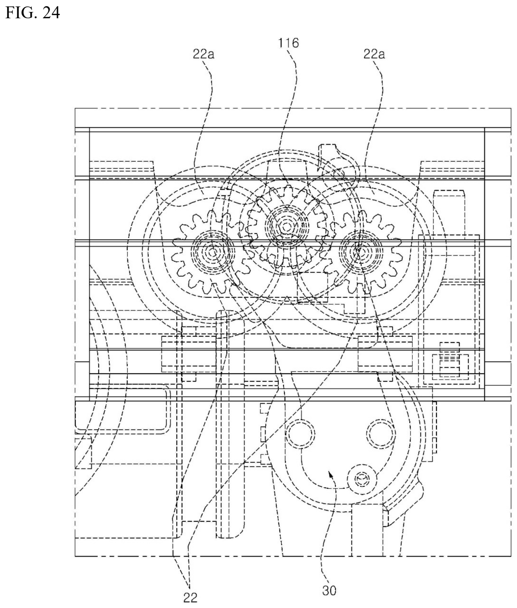

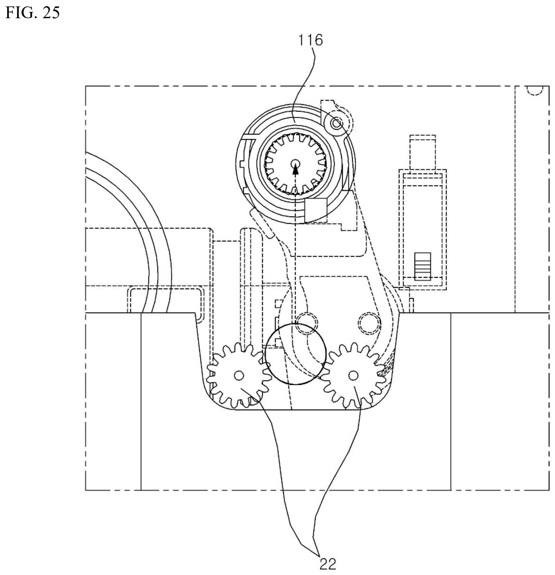

FIG. 24 is a view for reference in the description of a state in which left-right movement is enabled according to one embodiment of the present disclosure, and FIG. 25 is a view for reference in the description of a state in which the left-right movement is disable according to one embodiment of the present disclosure.

Referring to FIG. 24, the state in which the frame gear 22 and the drive gear 116 are engaged with each other is a state in which the frame gear 22 and the drive gear 116 can be rotated by the rotation of the drive motor 118, and the frame 11 and the main body 100 can move in the left-right direction.

Referring to FIG. 25, in a state in which the main body 100 is raised, the drive gear 116 is also raised from the lowest position, and the drive gear 116 is positioned spaced apart from the upper side of the frame gear 22. Therefore, in the state in which the main body 100 is raised, the drive gear 116 and the frame gear 22 are not engaged with each other, and even when the drive motor 118 is rotated, the frame gear 22 does not rotate.

In a state in which the frame gear 22 and the drive gear 116 are engaged with each other, the frame 11 and the main body 100 may move to the left or right depending on the rotation direction of the drive motor 118.

For example, when the drive motor 118 rotates clockwise, the drive gear 116 may rotate counterclockwise and the frame gear 22 may rotate clockwise. Accordingly, the frame 11 and the main body 100 may move to the left.

For example, when the drive motor 118 rotates counterclockwise, the drive gear 116 may rotate clockwise and the frame gear 22 may rotate counterclockwise. Accordingly, the frame 11 and the main body 100 may move to the right.

Depending on the number of gears and connection structure of the drive module 30, it may be possible for the rotation directions of the drive motor 118 and the drive gear 116 to be configured to be the same.

When the main body 100 reaches the lowest position, the main body 100 can move left and right, but in a state in which the main body 100 is raised, the main body 100 cannot move left and right.

The control unit 1010 may move the main body 100 in the left-right direction when the main body 100 is in the preset home position.

When moving in the left-right direction, the control unit 1010 detects a step using the ultrasonic sensor 260 to check the position of the window 1 and/or window frame 2.

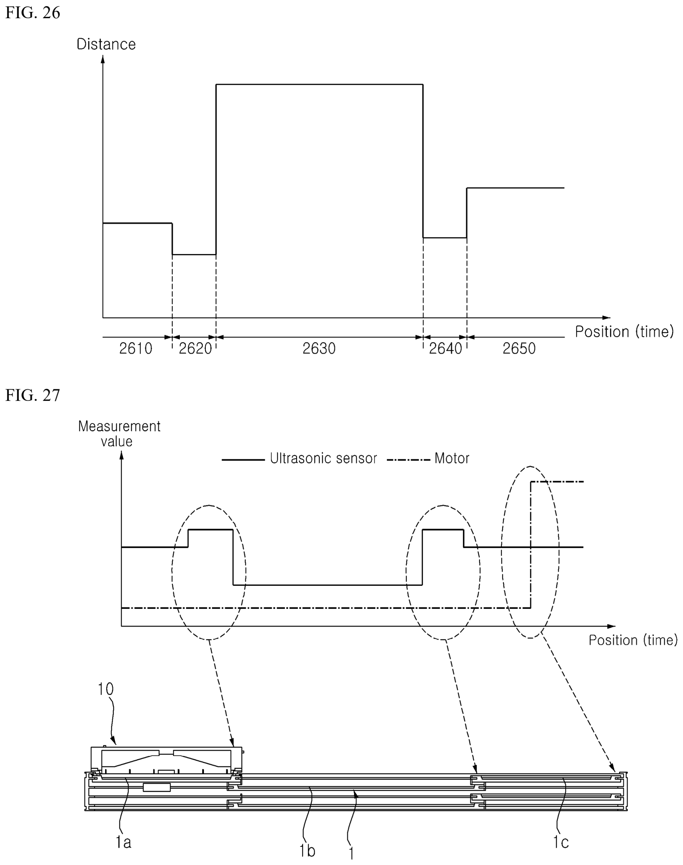

FIG. 26 and FIG. 27 are diagrams for reference in the description of window position determination according to one embodiment of the present disclosure.

FIGS. 26 displays the position (time) when moving from the leftmost to the rightmost on the X-axis, and displays distance data based on sensing data of the ultrasonic sensor 260 on the Y-axis.

In FIG. 27, the position (time) when moving from the leftmost to the rightmost is illustrated on the X-axis, and the measurement value based on the sensing data of the ultrasonic sensor 260 and the measurement value based on the sensing data of the motor sensor of the drive motor 118 are illustrated on the Y-axis.

In FIG. 27, the measurement value of the ultrasonic sensor 260 may be data based on the intensity or amount of the signal reflected and received. The motor sensor may be a current sensor, and the measurement value of the motor sensor in FIG. 27 may be data based on the current value. The measurement values may be the data itself measured by the sensors or secondary data processed therefrom.

Referring to FIGS. 26 and 27, the window 1 may include a central window 1b, and a left window 1a and a right window 1c of the central window 1b.

The window cleaning apparatus 10 may clean the left window 1a, the central window 1b, and the right window 1c in that order. Conversely, the window cleaning apparatus 10 may clean the right window 1c, the central window 1b, and the left window 1a in that order.

The left window 1a and the right window 1c may be positioned further back than the central window 1b. Therefore, a distance 2610 between the left window 1a and the window cleaning apparatus 10 may be shorter than a distance 2630 between the central window 1b and the window cleaning apparatus 10. In addition, a distance 2630 between the right window 1c and the window cleaning apparatus 10 may be shorter than a distance 2650 between the central window 1b and the window cleaning apparatus 10.

Each window 1 may include a glass and a glass frame supporting the glass. The glass frame may be positioned on the edge of the glass. Distances 2620 and 2640 between the glass frame and the window cleaning apparatus 10 may be shorter than distances 2610 and 2650 between each glass and the window cleaning apparatus 10.

Accordingly, the control unit 1010 may determine the positions of the left window 1a, the central window 1b, and the right window 1c based on the measurement value of the ultrasonic sensor 260.

The closer the distance between the ultrasonic sensor 260 and the object, the faster the reflected ultrasonic signal is received. Furthermore, the closer the distance between the ultrasonic sensor 260 and the window 1, the greater the intensity and quantity of the reflected ultrasonic signal. Therefore, the position of the window 1 may be determined based on the intensity or quantity of the reflected ultrasonic signal.

The control unit 1010 may determine the positions of the glass frames of the left window 1a, the central window 1b, and the right window 1c based on the height of the measurement values of the ultrasonic sensor 260.

The left-right movement region of the main body 100 may include a left end point and a right end point. The left end point may be positioned at the far left of the left-right movement region, and the right end point may be positioned at the far right of the left-right movement region.

When the main body 100 is positioned at the leftmost end point, the main body 100 can no longer move to the left. Therefore, even when the drive motor 118 is rotated to move the main body 100 to the left, the main body 100 cannot move and only the motor current of the drive motor 118 increases.

Accordingly, the control unit 1010 may recognize the overload of the motor based on the measurement value of the motor sensor and check the region where left and right movement is not possible.

The control unit 1010 may determine whether the main body 100 is positioned at the left and right end points are positioned based on the measurement values of the current sensor. In addition, the control unit 1010 may determine whether the main body 100 can move based on the measurement values of the speed sensor.

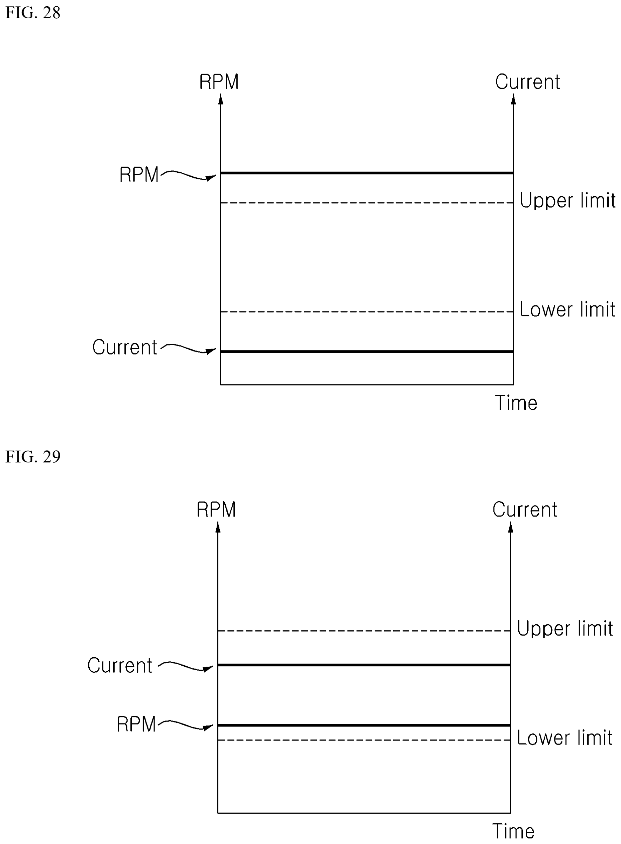

FIGS. 28 to 30 are diagrams for reference in the description of the operating state of the drive motor according to one embodiment of the present disclosure.

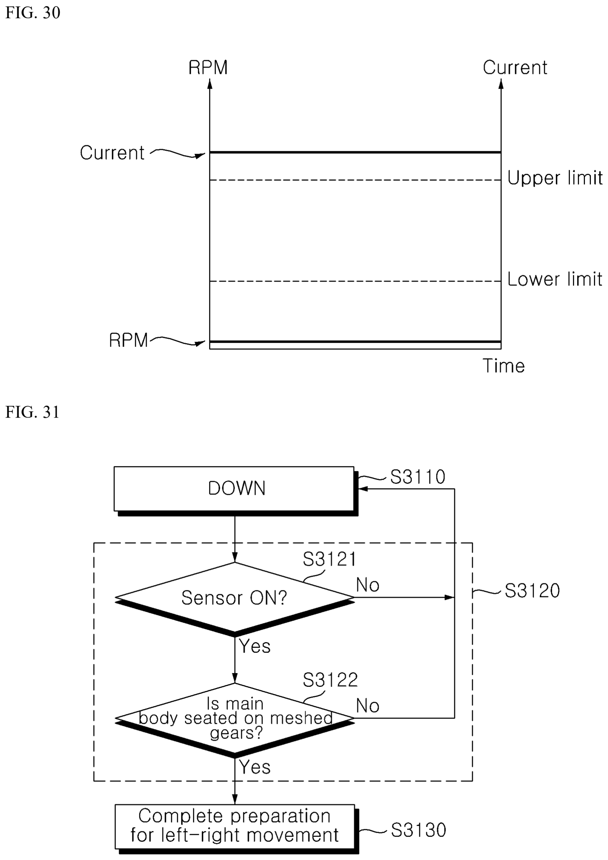

Referring to FIGS. 28 to 30, the operating states of the drive motor 118 may be divided into three. The three operating states are disengaged (FIG. 28), normal (FIG. 29), and overload (unable to move) (FIG. 30).

As illustrated in FIGS. 28 to 30, the rotation speed (RPM) and current for each operating state are displayed differently. Upper and lower limit management ranges may be set for each rotation speed (RPM) and current. The management range may be set based on the normal state of the drive motor 118.

When the drive gear 116 and the frame gear 22 are not engaged with each other and in a gear disengaged state, the main body 100 and the frame 11 cannot move in the left-right direction. In the gear disengaged state, even when the drive motor 118 is rotated, only the drive motor 118 rotates while the main body 100 and the frame 11 do not move in the left-right direction.

Therefore, as illustrated in FIG. 28, in the gear disengaged state, the rotation speed becomes higher than the upper speed limit. In addition, in the gear disengaged state, the current of the drive motor 118 becomes lower than the lower current limit.

When the current value measured by the current sensor is less than the current lower limit and the rotation speed value measured by the speed sensor is greater than the speed upper limit, the control unit 1010 may determine that the drive gear 116 and the frame gear 22 are in the gear disengaged state in which they are spaced apart from each other.

Referring to FIG. 29, in the normal state where the drive gear 116 and the frame gear 22 are engaged with each other, the rotation speed (RPM) and current of the drive motor 118 are within their respective management ranges.

When the current value measured by the current sensor is included in the current management range between the current lower limit and the current upper limit, and the rotation speed value measured by the speed sensor is included in the speed management range between the speed lower limit and the speed upper limit, the control unit 1010 may determine that the drive gear 116 and the frame gear 22 are in the normal state in which they are engaged with each other.

When the main body 100 is positioned at the left end point or the right end point, the main body 100 cannot move in one of the left and right directions. Referring to FIG. 30, when the drive motor 118 rotates to move in a direction in which the main body cannot move, the current increases due to overload and becomes higher than the current upper limit. In addition, in the state where the movement is not possible, since the main body 100 cannot move, the rotation speed of the drive motor 118 becomes 0 or very low, lower than the speed lower limit.

When the current value measured by the current sensor is greater than the current upper limit and the rotation speed value measured by the speed sensor is less than the speed lower limit, the control unit 1010 may determine a gear inoperable state in which the main body 100 cannot move even though the drive gear 116 and the frame gear 22 rotate.

The control unit 1010 may check the engagement status of the gears 116 and 22 and control their movement in the left-right direction. The control unit 1010 may determine whether the main body 100 is in the home position using a sensor such as the microswitch 320.

The control unit 1010 may check the operating states of the gears 116 and 22 and the drive motor 118 and control the movement in the left-right direction. The control unit 1010 may determine the operating states of the gears 116 and 22 and the drive motor 118 by rotating the drive motor 118 for testing and comparing the rotation speed and current obtained for the testing with the rotation speed and current stored in the memory 1030 during initial setup.

After the main body 100 moves the lowest position, the main body 100 may move left and right.

The first moving device 1021 may move (raise) the main body 100 upward and then move (lower) the main body 100 downward. The second moving device 1022 may move the main body 100 and the frame 11 in the left-right direction after the main body 100 has moved downward.

Before the main body 100 and the frame 11 move left and right, the control unit 1010 may distinguish between the disengaged, normal, and overload operating states with different rotation speeds and currents, and check that the main body 100 is seated on the meshed gears 116 and 22. Accordingly, drive failure due to gear disengagement is prevented, and safe up-and-down and left-right movement is possible.

The control unit 1010 may determine the engagement state, gear disengaged state, and gear inoperable state of the drive gear 116 and the frame gear 22 based on the measurement values of the current sensor and the speed sensor.

In addition, the control unit 1010 may rotate the drive motor 116 for a predetermined time before moving the main body 100, and determine whether the main body 100 can move based on the rotation speed of the drive motor 116 obtained during the predetermined time.

The control unit 1010 may determine whether the main body 100 is positioned at an end point in a first direction by rotating the drive motor 116 clockwise.

The control unit 1010 may determine whether the main body 100 is positioned at an end point in a second direction opposite to the first direction by rotating the drive motor 116 counterclockwise.

The control unit 1010 may determine the movement direction of the main body 100 as the second direction when the motor current value obtained when rotating the drive motor 116 clockwise is greater than the current upper limit value.

The control unit 1010 may determine the movement direction of the main body 100 as the first direction when the motor current value obtained when rotating the drive motor 116 counterclockwise is greater than the current upper limit value.

In addition, the control unit 1010 may check the movement time in the left-right direction and the boundary (glass frame) of the window 1 through the ultrasonic sensor 260, and determine whether to start the cleaning operation of cleaning the window while moving in the up-down direction.

FIG. 31 is a flowchart illustrating an operation method of the window cleaning apparatus according to one embodiment of the present disclosure.

Referring to FIG. 31, the first moving device 1021 may move (lower) the main body 100 downward (S3110). The first moving device 1021 may move the main body 100 in the up-down direction, and the cleaning module 170 may perform window cleaning.

The control unit 1010 may determine whether the left-right movement is possible (S3120). Whether the left-right movement is possible may include at least one condition. For safer movement, whether the left-right movement is possible may be determined using a two-stage condition.

When the main body 100 moves downward and reaches the lowest position, the main body may be detected by the sensor such as the microswitch 320 (S3121). When the microswitch 320 is turned on, the control unit 1010 may determine that the main body 100 is positioned in the home position.

The control unit 1010 may rotate the drive motor 118 for a predetermined time and check the rotation speed and current. Based on the rotation speed and current, the control unit 1010 may distinguish between the disengaged, normal, and overload operation states and check whether the main body 100 is seated on the meshed gears 116 and 22 (S3122).

The second moving device 1022 may move the main body 100 and frame 11 in the left-right direction.

Before the main body 100 and frame 11 move left and right, the control unit 1010 may distinguish between the disengaged, normal, and overload operation states with different the rotation speeds and currents, and check that the main body 100 is seated on the meshed gears 116 and 22.

When the left-right movement condition is satisfied (S3120), the control unit (1010) may complete preparation for left-right movement (S3130).

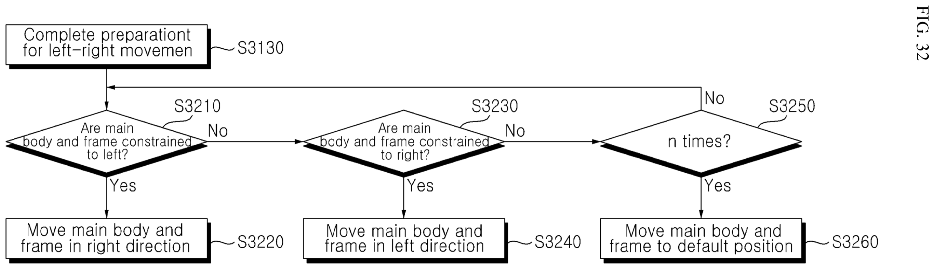

FIG. 32 is a flowchart illustrating the operation method of the window cleaning apparatus according to one embodiment of the present disclosure.

Referring to FIG. 32, in the state of completion of left-right movement preparation (S3130), it may be determined whether the current position of the main body 100 is the left end point (maximum left) or the right end point (maximum right) (S3210 and S3230).

The control unit 1010 may determine whether the frame 11 and the main body 100 are constrained to the left by rotating the drive motor 118 clockwise for a predetermined time (S3210).

When the drive motor 118 rotates clockwise, the drive gear 116 rotates counterclockwise, and the frame gear 22 may rotate clockwise. Accordingly, the frame 11 and the main body 100 may move to the left.

When the movement is not possible despite clockwise rotation of the drive motor 118, the control unit 1010 may determine that the current position is the left end point and the current state is in a left-constrained state where movement in the left direction is not possible (S3210).

In this case, the control unit 1010 may determine the movement direction so that the main body 100 and the frame 11 move in the right direction (S3220).

The control unit 1010 may determine whether the frame 11 and the main body 100 are constrained to the right by rotating the drive motor 118 counterclockwise for a predetermined time (S3230).

When the drive motor 118 rotates counterclockwise, the drive gear 116 rotates clockwise and the frame gear 22 may rotate counterclockwise. Accordingly, the frame 11 and the main body 100 may move to the right.

When the movement is not possible despite counterclockwise rotation of the drive motor 118, the control unit 1010 may determine that the current position is the right end point and that the current state is a right-constrained state where movement in the right direction is not possible (S3230).

In this case, the control unit 1010 may determine the movement direction so that the main body 100 and the frame 11 move in the left direction (S3240).

Meanwhile, when the state is the movable state in which the main body 100 and the frame 11 are not constrained in either direction (S3210, S3230), the main body 100 and the frame 11 may be moved to a set default position (S3260).

According to an embodiment, the determination of whether the main body 100 and the frame 11 are constrained (S3210 and S3230) is performed n times, and when the movable state is determined in all of the n determinations (S3210 and S3230), the main body 100 and the frame 11 may be moved to the set default position (S3260).

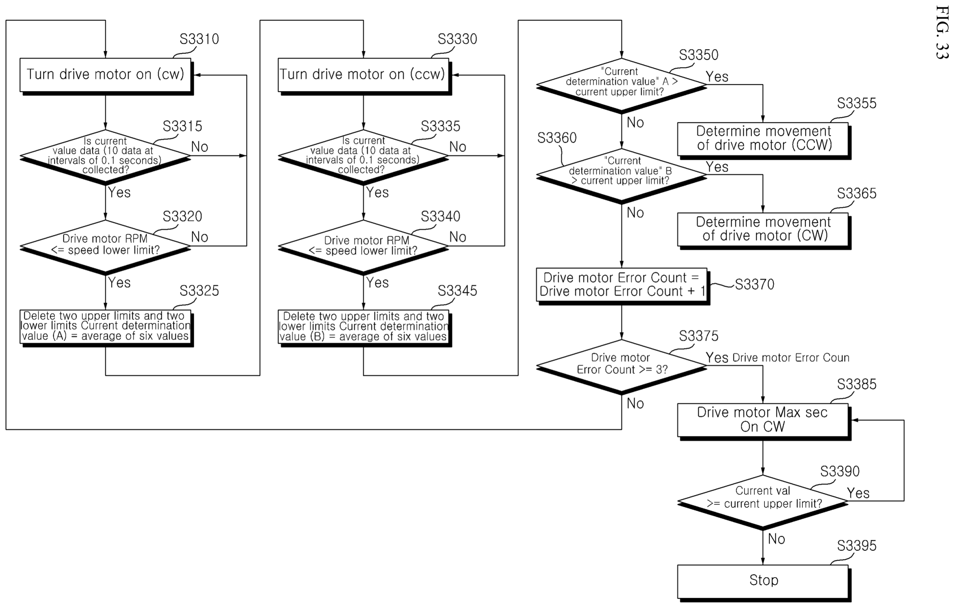

FIG. 33 is a flowchart illustrating the operation method of the window cleaning apparatus according to one embodiment of the present disclosure.

Referring to FIG. 33, the control unit 1010 may rotate the drive motor 118 clockwise for a predetermined period of time (for example, 1 second) (S3310). The current sensor may collect motor current data for a predetermined time (for example, 10 data at intervals of 0.1 seconds) (S3315).

Additionally, the control unit 1010 may determine whether the rotation speed of the drive motor 118 obtained by the speed sensor is equal to or less than the speed lower limit (S3320).

Meanwhile, the control unit 1010 may discard some (for example, the two largest values, the two smallest values) of the collected motor current data and calculate the average value of the remaining data as a current determination value (A) (S3325).

The control unit 1010 may rotate the drive motor 118 counterclockwise for a predetermined period of time (for example, 1 second) (S3330). The current sensor may collect motor current data for a predetermined period of time (for example, 10 data at intervals of 0.1 seconds) (S3335).

Additionally, the control unit 1010 may determine whether the rotation speed of the drive motor 118 obtained by the speed sensor is equal to or less than the speed lower limit (S3340).

Meanwhile, the control unit 1010 may discard some (for example, the two largest values, the two smallest values) of the collected motor current data and calculate the average value of the remaining data as the current determination value (B) (S3345).

The control unit 1010 compares the current determination value (A) with the current upper limit value to determine whether the main body 100 and the frame 10 are constrained to the left (S3350). In the case of the left-constrained state (S3350), the control unit 1010 may determines the direction of movement to the right direction and rotate the drive motor 118 counterclockwise (S3355).

The control unit 1010 compares the current determination value (B) with the current upper limit value to determine whether the main body 100 and the frame 10 are constrained to the right (S3360). In the case of a right-constrained state (S3360), the control unit 1010 may determines the movement direction to the left direction and rotate the drive motor 118 clockwise (S3365).

When the main body 100 and the frame 11 are not constrained in both directions (S3350 and S3360), the control unit 1010 increases the error count by 1 (S3370).

The process (S3310 to S3370) may be repeated until the error count reaches the reference number (for example, 3) (S3375).

When the error count reaches the reference number (for example, 3) (S3375), the control unit 1010 may rotate the drive motor 118 clockwise for a set maximum time (S3380). The set maximum time may be determined as a time required for the main body 100 to reach a left end position even through the main body 100 is positioned at any position.

The control unit 1010 may compare the motor current obtained by the current sensor with the current upper limit (S3385) and stop the drive motor 118 (SS3390).

According to an embodiment, the control unit 1010 may compare the motor current obtained by the current sensor with the current upper limit value (S3385) and rotate the drive motor 118 counterclockwise.

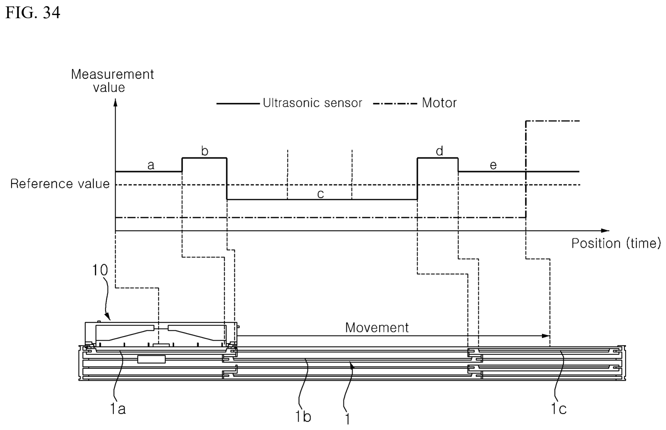

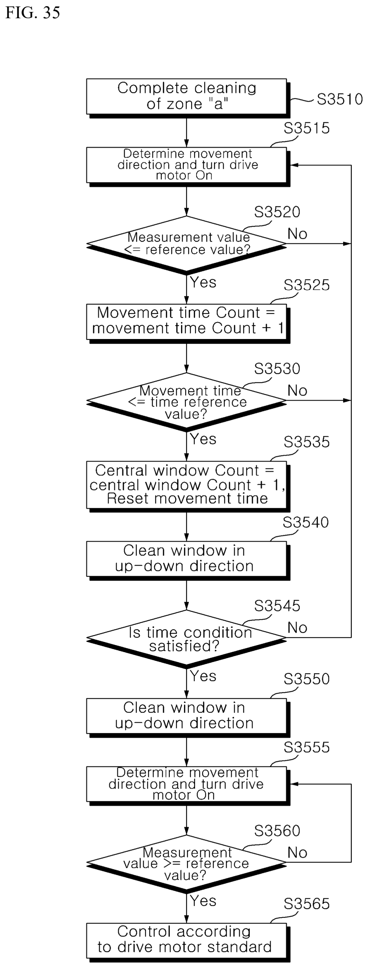

FIG. 34 is a diagram for reference in the description of window cleaning according to one embodiment of the present disclosure, and FIG. 35 is a flowchart illustrating the operation method of the window cleaning apparatus according to one embodiment of the present disclosure.

In FIG. 34, the position (time) when moving from the leftmost to the rightmost is illustrated on the X-axis, and the measurement value based on the sensing data of the ultrasonic sensor 260 and the measurement value based on the sensing data of the motor sensor of the drive motor 118 are illustrated on the Y-axis.

In FIG. 34, the measurement value of the ultrasonic sensor 260 may be data based on the intensity or amount of the signal reflected and received. The motor sensor may be the current sensor, and in FIG. 27, the measurement value of the motor sensor may be data based on the current value. The measurement values may be the data itself measured by the sensors or secondary data processed therefrom.

Referring to FIGS. 34 and 35, the window cleaning apparatus 10 may clean the left window 1a, the central window 1b, and the right window 1c in that order.

The control unit 1010 may determine that the windows are both side windows 1a and 1c when the measurement value of the ultrasonic sensor 260 is greater than the reference value. In addition, the control unit 1010 may determine that the largest zones "b" and "d", among the region where the measurement value of the ultrasonic sensor 260 is greater than the reference value, are the glass frame regions of both side windows 1a and 1c, and the relatively smaller zones "a" and "e" are the cleaning target regions.

Additionally, the control unit 1010 may determine that a zone "c", where the measurement value of the ultrasonic sensor 260 is smaller than the reference value, corresponds to the central window 1b.

As the main body 100 moves in the up-down direction, the cleaning module 170 may clean the zone "a" (S3510).

After the cleaning of the zone "a" is completed, as described above, the control unit 1010 may determine whether the left-right movement is possible and determine the direction of movement (S3515). The control unit 1010 may rotate the drive motor 118 according to the determined direction of movement (S3515).

When the measurement value of the ultrasonic sensor 260 is equal to or less than the reference value during the movement, the control unit 1010 may count the movement time (S3525).

When the movement time exceeds the time reference value (S3530), the control unit 1010 may stop the left-right movement, increase the central window count by 1, and reset the movement time (S3535).

The control unit 1010 may clean the central window 1b while moving the main body 100 in the up-down direction (S3540).

Meanwhile, the central window 1b is often wider than both side windows 1a and 1c. When cleaning the wider central window 1b, multiple cleaning operations may be required. When cleaning the central window 1b, depending on the set mode, a combination of cleaning in the up-down direction, movement in the left-right direction, and the cleaning again in the up-down direction may be performed. For example, the central window 1b may be cleaned in three passes. In this case, after a first cleaning in the up-down direction, the movement in the left-right direction may be performed; after a second cleaning in the up-down direction, the movement in the left-right direction may be performed; and a third cleaning in the up-down direction may be performed.

The control unit 1010 may determine whether the cleaning time corresponds to a time for cleaning a last region of the central window 1b by comparing the cleaning time with a set value stored in the memory 1030 during initial setup (S3545). When the time condition is satisfied (S3545), the control unit 1010 may clean the last region of the central window 1b (S3550).

Afterwards, the control unit 1010 may determine whether the left-right movement is possible and determine the direction of movement (S3555), and the control unit 1010 may rotate the drive motor 118 according to the determined direction of movement (S3555).

When the measurement value of the ultrasonic sensor 260 is equal to or more than the reference value during the movement, the control unit 1010 may check the position of the last right window 1c and control the drive motor 118 according to a preset standard (time or distance) so as to move the last section (S3565).

Afterwards, the control unit 1010 may clean the right window 1c while moving the main body 100 in the up-down direction.

According to the present disclosure, a single window cleaning apparatus 100 can clean the central window 1b and both side windows 1a and 1c. Furthermore, after initial installation, there is no need to manually move or operate the window cleaning apparatus 100 on the outer window each time it is cleaned, thereby improving user convenience and safety.

Although the preferred embodiments of the present disclosure have been illustrated and described above, the present disclosure is not limited to the specific embodiments described above, and various modifications may be made by a person having ordinary skill in the art to which the present disclosure pertains without departing from the gist of the present disclosure as claimed in the claims.

## Claims

1. A window cleaning apparatus comprising:
a frame (11) movably mounted on a window frame;
a main body (100) movably mounted on the frame (11) and configured to clean a window;
a first moving device (1021) configured to move the main body (100) in an up-down direction; and
a second moving device (1022) configured to move the main body (100) and the frame (11) in a left-right direction,
wherein the second moving device (1022) includes a drive gear (116) and a drive motor (118) configured to rotate the drive gear (116), and
wherein the main body (100) and the frame (11) move left or right in accordance with rotation of the drive motor (118).

2. The window cleaning apparatus of claim 1, wherein a gear module (20) is disposed in a lower frame of the frame (11), and
wherein the gear module (20) includes a frame gear (22) corresponding to the drive gear (116).

3. The window cleaning apparatus of claim 2, wherein the drive gear (116) and the frame gear (22) are engaged with each other, and
wherein, when the drive motor (118) rotates, the main body (100) and the frame (11) move in accordance with a rotational direction of the drive motor (118).

4. The window cleaning apparatus of claim 2 or 3, wherein the gear module (20) includes a frame moving roller (22a) connected to the frame gear (22).

5. The window cleaning apparatus of claim 4, wherein the frame moving roller (22a) includes a recessed portion into which the window frame of the window is inserted.

6. The window cleaning apparatus of claim 5, wherein the gear module (20) includes a frame guide roller (23) positioned below the frame moving roller (22a), and
wherein the frame guide roller (23) comes into contact with a side surface of the window frame inserted into the recessed portion.

7. The window cleaning apparatus of one of claims 2 to 6, wherein the frame gear (22) includes two or more gears, and
wherein the two or more gears are disposed symmetrically about the drive gear (116).

8. The window cleaning apparatus of one of claims 1 to 7, wherein the second moving device (1022) further includes a reduction gear connected to the drive gear (116).

9. The window cleaning apparatus of one of claims 1 to 8, wherein the second moving device (1022) moves the main body (100) in the left-right direction when the main body (100) is in a preset home position.

10. The window cleaning apparatus of claim 9, wherein the home position is a lowest position among positions in which the main body (100) is movable in the up-down direction.

11. The window cleaning apparatus of claim 9 or 10, wherein the second moving device (1022) further includes a microswitch configured to detect whether the main body (100) is in the home position.

12. The window cleaning apparatus of one of claims 1 to 11, further comprising:
an ultrasonic sensor (260) configured to emit sound waves toward the window; and
a control unit (1010) configured to determine a distance to the window based on a measurement value of the ultrasonic sensor (260).

13. The window cleaning apparatus of claim 12, wherein the control unit (1010) is configured to determine positions of a central window, and left and right windows of the central window, based on the measurement value of the ultrasonic sensor (260).

14. The window cleaning apparatus of claim 12 or 13, further comprising:
a current sensor configured to measure the current of the drive motor (118),
wherein the control unit (1010) is configured to determine whether the main body (100) is positioned at left and right end points, based on a measurement value of the current sensor.

15. The window cleaning apparatus of one of claims 12 to 14, further comprising:
a speed sensor configured to measure the rotation speed of the drive motor (118),
wherein the control unit (1010) is configured to determine whether the main body (100) is movable based on a measurement value of the speed sensor.
